# EUROPÄISCHE PATENTSCHRIFT

(11) **EP 3 568 326 B1**
(45) Veröffentlichungstag und Bekanntmachung des Hinweises auf die Patenterteilung: **17.03.2021**
(21) Anmeldenummer: 19717451.9
(22) Anmeldetag: 05.04.2019
(51) Int. Cl.: B60R 22/48, A44B 11/25

(54) **FLUGZEUGSICHERHEITSGURT, SYSTEM ZUR ERFASSUNG EINES SCHLIESSZUSTANDS EINES SICHERHEITSGURTS SOWIE VERFAHREN ZUR ERFASSUNG EINES SCHLIESSZUSTANDS**
AEROPLANE SAFETY BELT, SYSTEM FOR DETECTING A CLOSED STATE OF A SAFETY BELT, AND METHOD FOR DETECTING A CLOSED STATE
CEINTURE DE SÉCURITE D'AVION, SYSTÈME DE DÉTECTION D'UN ÉTAT DE FERMETURE D'UNE CEINTURE DE SÉCURITE ET PROCÉDE DE DÉTECTION D'UN ÉTAT DE FERMETURE

(30) Priorität: 06.04.2018 DE 102018002819
(43) Veröffentlichungstag der Anmeldung: 20.11.2019
(73) Patentinhaber: Aircraft Cabin Modification GmbH, 87700 Memmingen (DE)
(72) Erfinder: HAGH SHENAS NOSHARI, Ashkan, 22605 Hamburg (DE); DAUENHAUER, Mariana, 87471 Durach (DE)
(74) Vertreter: Vossius & Partner Patentanwälte Rechtsanwälte mbB
(86) Internationale Anmeldenummer: PCT/EP2019/058669
(87) Internationale Veröffentlichungsnummer: WO 2019/193166

(56) Entgegenhaltungen:
- EP-A1- 2 189 372
- EP-A2- 3 170 704
- WO-A1-2016/196464
- WO-A1-2019/162399
- DE-A1-102006 030 193
- US-A- 2 893 088
- US-A1- 2009 243 892
- US-B1- 6 184 785

## Beschreibung

Die vorliegende Erfindung betrifft ein Gurtschloss für einen Flugzeugsicherheitsgurt, einen Flugzeugsicherheitsgurt, ein System zur Erfassung und Anzeige eines Schließzustands mindestens eines Sicherheitsgurts in einem Flugzeug sowie ein Verfahren zur Erfassung eines Schließzustands von mindestens einem Gurtschloss für einen Flugzeugsicherheitsgurt.

Generell ist es im Bereich der zivilen Luftfahrt notwendig, wenigstens bei Start und Landung zu kontrollieren, ob die Fluggäste angeschnallt sind. Diese Kontrolle wird üblicherweise optisch durch die jeweiligen Flugbegleiter durchgeführt, was deren Arbeitslast erhöhen und/oder zur Verzögerung beim Start führen kann. Darüber hinaus kann es für eine Fluggesellschaft wichtig sein, auch Informationen über den Schließzustand eines Sicherheitsgurts während des Fluges zu sammeln, um gegebenenfalls unberechtigte Schadensersatzansprüche abwenden zu können. Beispielsweise können bei schweren Turbulenzen jeweilige Passagiere, trotz anders lautender Anweisungen, ihren Sicherheitsgurt geöffnet lassen und deswegen verletzt werden. In diesem Fall kann es für eine Fluggesellschaft schwierig sein, nachzuweisen, dass jeweilige Schadensersatzansprüche ungerechtfertigt sind. Darüber hinaus kann durch eine Erfassung des Schließzustands auch eine manuelle und optische Kontrolle durch die jeweiligen Flugbegleiter während des Fluges bei Turbulenzen, wodurch diese einem Sicherheitsrisiko ausgesetzt sein können, vermieden werden. Zudem bietet eine solche Erfassung auch jeweilige Vorteile hinsichtlich des Komforts für die Passagiere. Beispielsweise sind Passagiere häufig unter einer Decke angeschnallt, wodurch dann eine optische Kontrolle des Schließzustands des Sicherheitsgurts für jeweilige Flugbegleiter nicht möglich ist. Entsprechend müssen jeweilige Passagiere die Decke von dem Sicherheitsgurt abheben, damit eine optische Kontrolle möglich ist. Hierzu kann es auch notwendig sein, schlafende Passagiere zu wecken. Auch hierdurch können weitere Verzögerungen bei der Kontrolle entstehen.

Aus der CN 107512239 A und aus der DE 10 2006 042 299 B4 sind beispielsweise Systeme bekannt, welche eine Erfassung eines Schließzustands von Sicherheitsgurten in einem Passagierflugzeug ermöglichen.

Solche Systeme haben in der zivilen Luftfahrt bisher keine Verbreitung gefunden, da deren Integration umständlich ist und diese mit einem großen zusätzlichen Gewicht verbunden sind, was die Effizienz eines damit ausgerüsteten Passagierflugzeugs reduziert. Die EP 2189372 A1 offenbart einen Flugzeugsicherheitsgurt mit einem Gurtschloss, wobei eine Sensoranordnung einen "smart reader" für einen "tag" als Sensor (RFID-Leser) entspricht, und zum Erfassen eines Schließzustandes des Gurts ausgelegt ist.

Die US2009243892 A1 offenbart einen Flugzeugsicherheitsgurt gemäß dem Oberbergriff des Anspruchs 1. Aufgabe der vorliegenden Erfindung ist es, diese Hindernisse zu überwinden.

Die Aufgabe wird erfindungsgemäß jeweils durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben, wobei vorteilhafte Ausgestaltungen eines Aspekts als vorteilhafte Ausgestaltungen jeweiliger anderer Aspekte und umgekehrt anzusehen sind.

Ein erster Aspekt der Erfindung betrifft einen Flugzeugsicherheitsgurt, wobei ein Gurtschloss eine Sensoranordnung aufweist, wobei die Sensoranordnung einen Sensor zum Erfassen eines Schließzustands des Flugzeugsicherheitsgurtes, einen Sender zum Übertragen des erfassten Schließzustands und eine Stromversorgung zum Betreiben des Sensors und des Senders aufweist. Dadurch kann das Gurtschloss zuverlässig einen Schließzustand erfassen und ist dabei leicht, kompakt und insbesondere einfach nachträglich an jeweiligen Sitzen bzw. Sicherheitsgurten des Flugzeugs integrierbar und/oder nachrüstbar. Durch die Stromversorgung kann auf einen Anschluss an eine externe Stromquelle, wie beispielsweise das Bordnetz des Passagierflugzeugs verzichtet werden. Ein solcher Anschluss erfordert beispielsweise eine elektrische Leitung in einem Gurtband des Sicherheitsgurtes. Dadurch sind bei einer nachträglichen Nachrüstung mehr Teile auszutauschen als dies bei dem oben beschriebenen Gurtschloss notwendig ist. Darüber hinaus kann ein Bordnetz und/oder eine Stromversorgung jeweiliger anderer elektrischer Bauteile eines Flugzeugsitzes nicht für einen solchen zusätzlichen Stromverbrauch ausgelegt sein. Insgesamt ist ein elektrischer Anschluss eines Gurtschlosses mit einer Sensoranordnung an einem externen Stromnetz aufwendig und kann zu negativen Wechselwirkungen führen, beispielsweise mit dem Bordnetz. Zudem können jeweilige notwendige elektrische Leitungen insgesamt ein größeres Gewicht aufweisen als jeweilige einzelne Stromversorgungen in dem Gurtschloss.

Das Gurtschloss ist gemäß der Erfindung ein Aufnahmeelement eines Flugzeugsicherheitsgurtes zum Aufnehmen einer korrespondierenden Schlosszunge. Der Flugzeugsicherheitsgurt ist entsprechend geschlossen, wenn die Schlosszunge in dem Gurtschloss eingeführt ist und dort verrastet ist. Entsprechend kann der Sensor beispielsweise das Einführen der Schlosszunge und/oder das Verrasten des Sicherheitsgurtes erfassen und entsprechend damit den Schließzustand bzw. geschlossenen Schließzustand. Alle anderen Zustände können als geöffneter Zustand oder geöffneter Schließzustand bezeichnet werden.

In einer weiteren vorteilhaften Ausgestaltung des ersten Erfindungsaspekts weist die Stromversorgung eine Batterie auf und der Sender ist ein kabelloser Sender, um den Schließzustand kabellos zu übertragen. Entsprechend ist so keinerlei kabelgebundene Anbindung des Gurtschlosses an andere Bauteile notwendig, auch nicht zur Übertragung des Schließzustands. Die Schließzustandserfassung kann so autark erfolgen. Entsprechend ist das Gurtschloss oder das Gurtschloss inklusive daran befestigtem Gurt besonders einfach nachträglich nachrüstbar und das Gewicht eines entsprechenden Systems bzw. des Gurtschlosses besonders klein. Die gesamte Sensoranordnung kann so beispielsweise weniger als 20 Gramm, insbesondere weniger als 10 Gramm wiegen. Als Batterie kann beispielsweise eine Lithium-Ionen-Batterie und/oder eine Knopfzelle, vorgesehen werden, welche eine hohe Kapazität hat und so nur selten gewechselt werden muss. Vorteilhafterweise wird eine Batterie verwendet, welche genügend Strom für eine Benutzungsdauer von wenigstens 2 Jahren bereitstellt. Dadurch können ausreichend lange Wartungsintervalle sichergestellt werden, so dass die zusätzlichen Betriebskosten gering gehalten sind. Insbesondere ist die Lebensdauer der Batterie auf andere reguläre Wartungszyklen, insbesondere der Sitze und/oder der Kabinenausstattung, vorteilhafterweise abgestimmt.

Vorteilhafterweise kann die Batterie auch als wiederaufladbare Batterie ausgebildet sein. Dann ist ein Austausch nicht notwendig. Zum Wiederaufladen kann die Batterie entnommen werden oder das Gurtschloss einen Ladeanschluss aufweisen, wodurch eine Entnahme entfallen kann.

In weiterer vorteilhafter Ausgestaltung des ersten Erfindungsaspektes ist es vorgesehen, dass der Sender ein Bluetooth-Sender ist. Ein Bluetooth-Sender zeichnet sich durch einen besonders geringen Stromverbrauch aus und erzeugt keine oder nur sehr geringe Interferenzen mit anderen Funkfrequenzen und Funksystemen des Flugzeugs. Insbesondere kann vorteilhafterweise ein so genannter Bluetooth-Low-Energy-Sender verwendet werden, dessen Übertragungsstandard sich durch einen besonders geringen Stromverbrauch bei hoher Reichweite auszeichnet. Dadurch kann eine lange Betriebsdauer ohne Wechsel der Stromversorgung bzw. der Batterie sichergestellt werden.

Alternativ oder zusätzlich kann als Sender beispielsweise auch ein WLAN-Sender verwendet werden, welcher beispielsweise einfach mit einem bestehenden WLAN-Netz des Passagierflugzeugs verbunden werden kann. So kann der jeweilige Schließzustand einfach an ein bereits vorhandenes Bordsystem, wie beispielsweise ein Entertainment-System oder Kabinenüberwachungs- und/oder -steuerungssystem, übertragen werden. Auch dadurch ist die Integration besonders einfach.

Alternativ oder zusätzlich kann der Sender auch als Mobilfunksender ausgebildet sein, beispielsweise zur Datenübertragung mittels des LTE-, UMTS- oder 3G-Standards. Auch hier können jeweilige Daten leicht über ein bereits im Flugzeug installiertes Mobilfunknetz übertragen werden. Zudem zeichnen sich solche Sender durch eine hohe Reichweite aus, so dass auch bei großen Passagierflugzeugen eine sehr geringe Anzahl von Empfangseinheiten ausreichend sein kann.

In weiterer vorteilhafter Ausgestaltung des ersten Aspekts der Erfindung ist es vorgesehen, dass der Sender konfiguriert ist, bei einer Änderung des Schließzustands von einem passiven in einen aktiven Zustand überzugehen, um den erfassten Schließzustand zu übertragen, wobei der Sender ferner konfiguriert ist, nach der Übertragung des erfassten Schließzustands in einen passiven Zustand überzugehen. Dadurch kann vorteilhafter Weise der Stromverbrauch reduziert werden, wodurch eine besonders lange Betriebsdauer ohne einen Wechsel und/oder Laden der Stromversorgung bzw. Batterie möglich ist. Beispielsweise sendet der Sender nur, dass der Schließzustand offen ist, wenn das Gurtschloss geöffnet wird und stellt danach seinen Sendebetrieb wieder ein. Erst bei einem erneuten Schließen des Sicherheitsgurts wird der nunmehr geänderte Zustand erneut übertragen, wobei der Sender nur für diese Übertragung aktiviert werden kann.

Alternativ oder zusätzlich kann das Gurtschloss auch seinen Schließzustand, d.h., ob das Gurtschloss geöffnet oder geschlossen ist, periodisch in vorbestimmten Zeitabständen übertragen. Dadurch kann die Sensoranordnung besonders einfach gestaltet sein, da der Sensor nicht dazu ausgebildet sein muss, den Sender zu aktivieren, bei dennoch geringem Stromverbrauch. Zudem ist so auch bei geringem Stromverbrauch eine quasi kontinuierliche Überwachung des Schließzustands möglich, so dass jeweilige ungerechtfertigte Schadensersatzansprüche gut abgewehrt werden können.

In weiterer vorteilhafter Ausgestaltung des ersten Erfindungsaspekts ist es vorgesehen, dass der Sender ferner konfiguriert ist, nach dem Übertragen des Schließzustands so lange in dem aktivierten Zustand zu verbleiben, bis eine Empfangsbestätigung des zuvor übertragenen Schließzustands am Sender erhalten wird. Es kann sich somit um ein Gurtschloss handeln, bei welchem der Sender erst nach erfolgreicher Übertragung des Schließzustands zur Energieeinsparung deaktiviert wird. Die erfolgreiche Übertragung kann dabei durch eine empfangene Empfangsbestätigung erfasst werden. Dadurch kann die Zuverlässigkeit der Erfassung gesteigert werden bzw. der Aufzeichnung jeweiliger Schließzustände. Sollte das Gurtschloss keine Empfangsbestätigung erhalten, kann, beispielsweise nach einer vorbestimmten Zeitdauer, der Schließzustand erneut übertragen werden. Der Sender kann dafür auch als Sende-/Empfangseinheit ausgebildet sein, um auch die jeweiligen Empfangsbestätigungen empfangen zu können. Vorzugsweise dient eine Antenne des Senders auch als Antenne zum Empfangen, damit der Sender besonders klein, leicht und bauraumsparend sein kann.

Gemäß der Erfindung ist es vorgesehen, dass das Gurtschloss ferner einen Hauptkörper, der eine Grundplatte und ein an der Grundplatte drehbar gelagertes Plattenelement umfasst, und eine Abdeckplatte aufweist, die eine Ausnehmung auf ihrer Unterseite aufweist, wobei die Unterseite der Abdeckplatte mit dem Plattenelement verbunden ist, so dass sich ein Hohlraum zwischen dem Plattenelement und der Abdeckplatte ausbildet, wobei die Sensoranordnung in dem Hohlraum zwischen dem Plattenelement und der Abdeckplatte angeordnet ist. Die Sensoranordnung ist so geschützt in einem Hohlraum des Gurtschlosses vor unbefugten Zugriffen angeordnet. Insbesondere können jeweilige Passagiere so die Sensoranordnung nicht manipulieren und/oder bei Benutzung des Gurtschlosses beschädigen.

Auch andere vorteilhafte Anordnungen sind möglich, beispielsweise kann auch an dem Plattenelement eine Ausnehmung vorgesehen sein, welche dann beispielsweise durch eine kostengünstige flache Abdeckplatte abgedeckt sein kann. Zum Bilden des Hohlraums kann das Plattenelement oder die Abdeckplatte als auch beide eine Ausnehmung aufweisen. Alternativ kann auch die Grundplatte zusammen mit einer Abdeckplatte einen Hohlraum bilden, in welchem die Sensoranordnung angeordnet ist. Auch dabei kann die Grundplatte und/oder die Abdeckplatte eine Ausnehmung aufweisen.

Mittels der Grundplatte bzw. dem Plattenelement und deren relativen Drehung zueinander kann das Gurtschloss beispielsweise geöffnet werden. Ein Zuschnappen kann automatisch mittels einer Feder, welche ebenfalls ein Teil des Gurtschlosses sein kann, bewirkt werden. Durch die Anordnung der Sensoranordnung in dem Hohlraum bei Ausnehmung in der Abdeckplatte werden die sicherheitskritischen Bauteile des Gurtschlosses nicht oder kaum strukturell geschwächt. So ist keine Modifikation des Hauptkörpers zur Verstärkung notwendig. Beispielsweise können die Grundplatte und das Plattenelement in Form und Größe bereits bestehenden bzw. konventionellen Gurtschlössern entsprechen.

Die Sensoranordnung kann beispielsweise an der Abdeckplatte befestigt sein und/oder die Abdeckplatte nachrüstbar ausgebildet sein. Beispielsweise kann die Abdeckplatte dazu ausgebildet sein, auf ein Plattenelement eines bereits in einem Passagierflugzeug installierten Gurtschlosses aufgeclipst und/oder aufgeklebt zu werden.

Vorteilhafterweise ist die Abdeckplatte aus einem für jeweilige Funkwellen des Senders gut durchlässigen Material gebildet, beispielsweise einem Kunststoff. Dadurch kann auch bei Senden mit einer geringen Leistung, was entsprechend einen geringen Stromverbrauch hat, eine große Sendereichweite erzielt werden. Dabei können die anderen Elemente des Gurtschlosses beispielsweise weiterhin aus einem Metall, wie zum Beispiel Aluminium, gebildet sein, um die hohen Kräfte im Falle eines Unfalls sicher aufnehmen zu können, wobei die Sendereichweite nur geringfügig oder gar nicht eingeschränkt ist.

Alternativ oder zusätzlich kann das Gurtschloss mit dem Hauptkörper, der die Grundplatte und das an der Grundplatte drehbar gelagerte Plattenelement aufweist, eine Durchgangsöffnung in der Grundplatte aufweisen. Vorzugsweise ist diese Durchgangsöffnung benachbart zu einer Lagerung des Plattenelements, der Sensoranordnung und/oder dem Sender der Sensoranordnung angeordnet. Dadurch kann eine Abschirmung der durch den Sender ausgestrahlten Funkwellen durch die Grundplatte verringert oder gänzlich vermieden werden, sodass die Sendereichweite besonders hoch ist. Ebenso kann so der Sensor besonders einfach den Schließzustand erfassen, beispielsweise durch die Durchgangsöffnung hindurch. Zudem kann so das Gewicht des Gurtschlosses gering gehalten werden.

In weiterer vorteilhafter Ausgestaltung des ersten Erfindungsaspekts weist das Gurtschloss ferner einen Analog-Digital-Wandler zum Umwandeln eines vom Sensor erfassten analogen Messsignals, das den Schließzustand des Sicherheitsgurts repräsentiert, in ein digitales Signal, das vom Sender übertragen werden kann, auf. Dadurch kann beispielsweise ein hinsichtlich Gewicht, Kosten und Stromverbrauch vorteilhafter digitaler Sender und ebenso ein hinsichtlich Gewicht, Kosten und/oder Stromverbrauch vorteilhafter und robuster analoger Sensor miteinander kombiniert werden.

In weiterer, nicht erfinderischen Ausgestaltung, ist es vorgesehen, dass der Sensor ein induktiver Sensor, ein Sensor zum Messen des elektrischen Widerstands oder, gemäß der Erfindung, ein mechanischer Sensor ist. Ein induktiver Sensor ist besonders vorteilhaft hinsichtlich seiner Zuverlässigkeit und benötigt keinen oder nur einen geringen elektrischen Strom zum Betrieb. Ein Sensor zum Messen des elektrischen Widerstands kann besonders einfach in dem Gurtschloss integriert werden, insbesondere wenn jeweilige Elemente aus einem elektrisch leitfähigen Material gebildet sind. Ein mechanischer Sensor kann besonders leicht und kostengünstig sein und insbesondere auch dazu genutzt werden, beispielsweise durch Schließen eines elektrischen Schaltkreises, den Sender einfach in den aktiven Zustand zu versetzen. Der Sensor zum Messen des elektrischen Widerstands und der mechanische Sensor benötigen zudem vorteilhafterweise keinerlei magnetische Komponenten zu deren Betrieb, was in einem Flugzeug von Vorteil hinsichtlich Interferenzen mit einigen Fluginstrumenten ist.

In weiterer, nicht erfinderischen Ausgestaltung, ist der induktive Sensor ein Reed-Schalter oder ein Hall-Sensor.

Gemäß der Erfindung ist es vorgesehen, dass das Gurtschloss des Flugzeugsicherheitsgurts einen Hauptkörper, der eine Grundplatte und ein an der Grundplatte drehbar gelagertes Plattenelement umfasst, aufweist. Dabei kann es sich insbesondere um das bereits geschilderte Gurtschloss mit Hauptkörper mit Grundplatte und Plattenelement handeln, ohne dass dabei jedoch zwingend eine Ausnehmung, Durchgangsöffnungen oder weitere oben geschilderte Gestaltungen vorgesehen sein müssen. Das Plattenelement kann zwischen wenigstens einem ersten Rotationsbereich, in welchem das Gurtschloss und die in das Gurtschloss eingeführte Schlosszunge miteinander verriegelt sind, und wenigstens einem zweiten Rotationsbereich, in welchem das Gurtschloss und die in das Gurtschloss eingeführte Schlosszunge entriegelt sind, wodurch die Schlosszunge aus dem Gurtschloss herausziehbar ist, verschwenkbar sein. Damit kann der Flugzeugsicherheitsgurt einen verriegelten ersten Zustand mit eingeführter Schlosszunge, einen entriegelten zweiten Zustand mit eingeführter Schlosszunge und einen unverbundenen dritten Zustand, in der die Schlosszunge nicht mit dem Gurtschloss zusammengeführt ist, aufweisen, wobei der dritte Zustand unabhängig von der Position des Plattenelements ist. Die Verriegelung kann dabei einer Verrastung entsprechen. Dafür kann entsprechend das Rastelement vorgesehen sein, welches vorzugsweise in Richtung der Verriegelung vorgespannt ist, und im verriegelten Zustand mit der Schlosszunge eingreift, um diese gegen ein Herausziehen aus dem Gurtschloss zu sichern bzw. ein solches Herausziehen zu blockieren.
Der Flugzeugsicherheitsgurt ist dazu ausgebildet, mit dem Sensor den ersten Zustand als geschlossenen Zustand zu erfassen und den zweiten und dritten Zustand als geöffneten Zustand. Der Sensor erfasst bevorzugt mit dem Plattenelement in dem zweiten Rotationsbereich und eingeführter Schlosszunge den geöffneten Zustand, mit dem Plattenelement in dem ersten Rotationsbereich und der nicht zusammengeführten Schlosszunge und Gurtschloss ebenfalls den geöffneten Zustand sowie mit dem Plattenelement in dem ersten Rotationsbereich und der zusammengeführten Schlosszunge und Gurtschloss den geschlossenen Zustand. Im geschlossenen Zustand ist der Passagier gesichert bzw. angeschnallt. Im geöffneten Zustand ist der Passagier ungesichert, obwohl das Gurtschloss und die Schlosszunge gemäß dem zweiten Zustand ineinander geführt sein können. Durch die entsprechende Ausbildung des Flugzeugsicherheitsgurts, der Sensoranordnung und/oder des Sensors kann entsprechend erfasst werden, ob der Passagier gesichert ist oder nicht. Entsprechend kann eine effektive Kontrolle erfolgen, die Flugbegleiter können bei ihrer Arbeit entlastet werden und versicherungsrelevante Informationen können gesammelt werden, ohne dass dabei getrennt erfasst werden müsste, ob eine Verriegelung vorliegt und ob die Schlosszunge und Gurtschloss zusammengeführt sind oder nicht. Entsprechend wird kein zweiter Sensor benötigt. Die Sensoranordnung kann also ausschließlich einen einzigen Sensor aufweisen. Dadurch kann die Sensoranordnung besonders klein, leicht, kostengünstig und energieverbrauchsarm sein. Zudem können jeweilige Fehlstellungen, beispielsweise eines durch Kleidung im zweiten Rotationsbereich blockierten Plattenelements, erfasst werden. Damit kann ein versehentlich nicht korrekt angelegter Flugzeugsicherheitsgurt detektiert und dem Passagier entsprechend bei seinem Anschnallen geholfen werden.

Der zusammengeführte Zustand von Schlosszunge und Gurtschloss kann bedeuten, dass die Schlosszunge in das Gurtschloss eingeführt ist. Das Gurtschloss und die Schlosszunge können so lösbar miteinander verbunden sein. Ein nicht zusammengeführter Zustand kann ein unverbundener Zustand sein, also beispielsweise ein Zustand, bei dem Schlosszunge und Gurtschloss voneinander beabstandet sind. Das Gurtschloss und die Schlosszunge können dabei natürlich über das Gurtschloss und den Flugzeugsitz trotzdem miteinander verbunden sein, insbesondere an jeweiligen den zum Zusammenführen zugewandten Seiten abgewandten Seiten. Der unverbundene Zustand ermöglicht aber kein Anschnallen bzw. Sichern eines jeweiligen Passagiers.

Jeweilige Rotationsbereiche des Plattenelements können jeweilige Winkelbereiche bezüglich der Grundplatte sein, wobei ein jeweiliger Winkel bevorzugt einen Innenwinkel zwischen der Haupterstreckungsebene des Plattenelements und des Grundkörpers entsprechen kann. Der erste Rotationsbereich kann beispielsweise einem Winkel zwischen Plattenelement und Grundplatte von bis zu 85° entsprechen und der zweite Rotationsbereich einem Winkel zwischen Plattenelement und Grundplatte größer als 85°. Der Winkel, welcher den ersten Rotationsbereich und den zweiten Rotationsbereich trennt, kann auch als Grenzwinkel bezeichnet werden. Bei Überschreitung des Grenzwinkels kann der Flugzeugsicherheitsgurt zum Öffnen entriegelt werden. Üblicherweise ist der Grenzwinkel durch Luftfahrtregularien für die zivile Luftfahrt vorgeschrieben. Durch das Vorsehen des ersten Rotationsbereichs kann ein ungewolltes Öffnen des Sicherheitsgurtes, beispielsweise durch ein Hängenbleiben an dem Plattenelement, vermieden werden.

Durch das Berücksichtigen des Grenzwinkels bei der Erfassung kann der Aufwand und Energieverbrauch bei der Erfassung des Schließzustand wesentlich reduziert werden. Es müssen nicht zwei Sensorsignale miteinander abgeglichen werden, wodurch die Rechenleistung und die Kosten jeweiliger elektronsicher Bauteile gering sein können. Eine Auswertung von Sensordaten und/oder eine Übertragung muss erst aktiviert werden, wenn der Sensor eine Kraft erfasst, die über einem Schwellwert liegt. Ist dagegen beispielsweise ein separater Sensor für eine Erfassung des Rotationswinkels des Plattenelements vorgesehen, würde eine ständige Auswertung und ein damit einhergehender Energieverbrauch, insbesondere bei einem Spielen eines Passagiers an dem Plattenelement, notwendig sein. Bevorzugt ist der Flugzeugsicherheitsgurt, insbesondere das Plattenelement und gegebenenfalls weiterer für das Verriegeln notwendiger Elemente, bezüglich des ersten Winkelbereichs bzw. einer verriegelten Stellung, vorgespannt, insbesondere federvorgespannt. Beispielsweise kann das Plattenelement ohne äußere Kräfte selbsttätig im Wesentlichen flach zum Liegen kommen, insbesondere parallel und/oder angrenzend zur Grundplatte. Der Rotationswinkel kann in dieser vorgespannten Stellung bevorzugt 0° betragen.

In weiterer vorteilhafter Ausgestaltung des Flugzeugsicherheitsgurts ist es vorgesehen, dass der Hauptkörper des Gurtschlosses ein ebenfalls drehbar an der Grundplatte gelagertes Betätigungselement, welches rotatorisch an das Plattenelement gekoppelt ist, aufweist. Gemäß der Erfindung, ist zudem der Sensor als mechanischer Sensor ausgebildet. Dabei kann der Flugzeugsicherheitsgurt so ausgebildet sein, dass die in das Gurtschloss eingeführte Schlosszunge das Betätigungselement in dem einem seiner zwei Rotationsbereiche mit einer geringeren Kraft gegen den Sensor drückt als in dem anderen seiner zwei Rotationsbereiche. Damit können in einfacher Art und Weise die Zustände des Flugzeugsicherheitsgurts gemäß obiger Beschreibung erfasst werden, ohne dass ein zweiter Sensor notwendig ist. Dadurch kann beispielsweise gleichzeitig erfasst werden, dass die Schlosszunge eingeführt ist und der Flugzeugsicherheitsgurt verriegelt ist, beispielsweise indem eine starke Kraft über das Betätigungselement auf den Sensor wirkt. Bei nicht verriegeltem Flugzeugsicherheitsgurt kann dagegen keine oder nur eine geringe Kraft auf den Sensor wirken, womit der geöffnete Zustand erfasst wird. Es kann eine Grenzkraft vorgesehen sein, ab welcher der Sensor den geöffneten bzw. geschlossenen Zustand erfasst. Bei nicht eingeführter Schlosszunge kann diese nicht auf das Betätigungselement wirken, sodass ebenfalls eine geringe oder keine Kraft auf den Sensor wirkt und der geöffnete Zustand erfasst wird. Dafür kann das Betätigungselement von dem Sensor weg vorgespannt sein, beispielsweise mit einer Feder. Nur im ersten Rotationsbereich und bei eingeführter Schlosszunge wird das Betätigungselement dann entgegen der Vorspannung gegen den Sensor gedrückt. Der Sensor kann dafür bevorzugt als Drucksensor ausgebildet sein, insbesondere als mechanischer Schalter, welcher durch das Betätigungselement betätigt bzw. gedrückt wird. Alternativ kann der Sensor aber auch als Zugsensor ausgebildet sein, womit sich die vorher beispielhaft beschriebenen Kraftverhältnisse umkehren. Eine entsprechende Vorspannung des Betätigungselements und auch eine Drückrichtung durch die eingeführte Schlosszunge im verriegelnden Rotationsbereich kann dann umgekehrt sein.

Ein mechanischer Sensor kann besonders robust, leicht und energieverbrauchsarm sein. Insbesondere gegen Stöße, Schläge und Vibrationen kann der mechanische Sensor besonders resistent sein. Gurte stoßen häufig gegen Sitzkomponenten, wie beispielsweise Armlehnen, und werden dadurch besonders beansprucht. Mechanische Schalter sind bei solchen Belastungen besonders störresistent. Zudem können jeweilige Falschmessungen bei solchen Umwelteinwirkungen besonders gut ausgeschlossen werden. Im Gegensatz zu elektronischen und magnetischen Sensoren kann ein mechanischer Sensor besonders resistent gegen salzige Flüssigkeiten sein und somit besonders geeignet, die Anforderungen eines sogenannten Salt Spray Test zu erfüllen. Gerade Kunststoffkomponenten werden bei solchen Tests schnell angegriffen. Mechanische Schalter können frei von Kunststoffkomponenten sein und bestehen so den Salt Spray Tests besonders einfach unbeschadet. Zudem ist ein mechanischer Sensor vorteilhaft, da er die Übertragung von dem Sender nicht oder besonders wenig stört. Ein magnetischer Sensor, wie ein magnetischer Schalter, kann dagegen die Übertragungsleistung insbesondere von Bluetooth Antennen, empfindlich stören. Zudem ist bei vielen magnetischen Schaltern bzw. Magneten eine Beeinträchtigung anderer Flugzeugsysteme zu befürchten. Mechanische Schalter können zudem weniger Strom als andere Schalter, wie beispielsweise magnetische Schalter, verbrauchen, womit die Batterie länger halten kann.

Vorzugsweise ist das Betätigungselement so ausgebildet, dass es mit dem Plattenelement mitrotiert. Dagegen sind die Grundplatte und die Schlosszunge bei Betätigung des Plattenelements, beispielsweise zum Entriegeln des Flugzeugsicherheitsgurts, im Wesentlichen unbewegt. Dadurch kann die Schlosszunge zwar weiter auf das Betätigungselement im zweiten Rotationsbereich drücken, wobei jedoch diese Kraft nicht mehr oder zumindest weniger in Richtung einer Messoberfläche des Sensors weist. Dadurch wird eine geringere oder keine Kraft mehr an dem Sensor erfasst. Dadurch kann der Sensor sozusagen entweder erfassen, ob die Schlosszunge eingeführt ist und das Plattenelement im ersten Rotationsbereich ist, oder ob die Schlosszunge nicht eingeführt ist oder das Plattenelement im zweiten Rotationsbereich ist. Der Sensor kann dabei nicht erfassen bzw. unterscheiden, ob die Schlosszunge nicht eingeführt ist oder das Plattenelement im zweiten Rotationsbereich ist. Diese Unterscheidung ist jedoch für die sicherheitsrelevante Frage, ob der Passagier gesichert ist, nicht relevant. Dieser Umstand kann durch eine einfache mechanische Konstruktion dazu genutzt werden, ohne einen zweiten Sensor korrekt zu erfassen, ob der Flugzeugsicherheitsgurt korrekt verschlossen ist oder nicht.

Der Sensor kann beispielsweise an dem Plattenelement angeordnet sein, insbesondere innerhalb des Aufnahmeraums für die Sensoranordnung. Das Betätigungselement kann eine Ausnehmung und/oder eine Durchgangsöffnung aufweisen, insbesondere im Bereich der Antenne der Sensoranordnung. Dadurch wird eine jeweilige Datenübertragung durch das Betätigungselement kaum oder gar nicht behindert bzw. die Sendereichweite kann besonders groß sein.

In weiterer vorteilhafter Ausgestaltung des Flugzeugsicherheitsgurts ist es vorgesehen, dass das Betätigungselement zusätzlich translatorisch beweglich an der Grundplatte gelagert ist, insbesondere in einer Richtung quer zu einer Einführrichtung der Schlosszunge und/oder einer Richtung quer zu einer Rotationsachse des Plattenelements. Diese translatorische Beweglichkeit ermöglicht eine einfache Kraftübertragung an den Sensor durch die eingeführte Schlosszunge, insbesondere wenn dieser an dem Plattenelement angeordnet ist. Das Betätigungselement kann dabei in der Ausnehmung zwischen Plattenelement und Abdeckung mit der Sensoranordnung angeordnet sein, damit die translatorische Beweglichkeit nicht für einen Benutzer als störend wahrgenommen wird. Alternativ oder zusätzlich kann das Betätigungselement auch eine Kraft durch eine Verformung an den Sensor übertragen.

Vorzugsweise ist das Betätigungselement entlang einer Achse oder in einem von der Lagerstelle aufgefächerten Winkelbereich translatorisch beweglich. Die translatorische Bewegungsrichtung kann zu einer rotatorischen Stellung des Betätigungselements bzw. des Plattenelements korrespondieren. Vorzugsweise ist die translatorische Bewegungsachse rechtwinkelig zur Rotationsachse ausgebildet und vorzugsweise quer zu der Haupterstreckung der Grundplatte und/oder der Schlosszunge. Insbesondere in einer Position, in der das Plattenelement und die Grundplatte parallel ausgerichtet sind, also bei einem Innenwinkel von 0°, kann die translatorische Bewegungsachse rechtwinkelig zur Einführrichtung der Schlosszunge sein. Vorzugsweise weist das Betätigungselement eine kombinierte dreh- und translatorische Lagerung an der Grundplatte auf. Ein besonders einfaches Beispiel hierfür ist ein Langloch an dem Betätigungselement, mittels welchem das Betätigungselement an einem Bolzen gelagert ist, an dem auch das Plattenelement gelagert ist.

In weiterer vorteilhafter Ausgestaltung des Flugzeugsicherheitsgurts ist es vorgesehen, dass die Schlosszunge wenigstens einen Vorsprung und das Betätigungselement wenigstens einen korrespondierenden Anlagebereich oder umgekehrt aufweist, welche geometrisch so aufeinander abgestimmt sind, dass die in das Gurtschloss eingeführte Schlosszunge das Betätigungselement in dem einen seiner zwei Rotationsbereiche mit einer geringeren Kraft gegen den Sensor drückt als in dem anderen seiner zwei Rotationsbereiche. Damit kann mechanisch einfach und zuverlässig die gewünschte Erfassung bereitgestellt werden. Vorzugsweise sind jeweilige Vorsprünge an der Schlosszunge vorgesehen, da diese so einfacher eingeführt werden kann. Vorzugsweise ist die translatorische Bewegungsachse oder der translatorische Bewegungsachsenwinkelbereich so abgestimmt, dass der Vorsprung das Plattenelement nur in einem der zwei Winkelbereiche in Richtung des Sensors drückt oder zumindest in diesem Winkelbereich stärker gegen den Sensor drückt. Jeweilige Vorsprünge sind bevorzugt seitlich und quer zur Einführrichtung vorstehende Nasen an der Schlosszunge. Dadurch wird die eigentliche Schlosszunge nicht strukturell geschwächt. Bevorzugt wird im ersten Rotationsbereich mehr Druck durch die aufeinander abgestimmten Geometrien auf den Sensor ausgeübt als im zweiten Rotationsbereich. Jeweilige Vorsprünge an der Schlosszunge sind bevorzugt quer, insbesondere rechtwinkelig, zu dessen Haupterstreckungsebene ausgebildet. Jeweilige Anlagebereiche sind bevorzugt als Außenwand jeweilige Lagerstellen des Betätigungselements bildenden Wandbereiche, insbesondere Außenwände eines Durchgangslochs, insbesondere eines Langlochs, zur Aufnahme eines Lagerbolzens.

In weiterer vorteilhafter Ausgestaltung des zweiten Erfindungsaspekts ist es vorgesehen, dass die Schlosszunge einen Permanentmagneten aufweist, der ein magnetisches Feld erzeugt, das hinreichend stark und derart ausgerichtet ist, dass es von dem Sensor zum Erfassen des Schließzustands verwendet werden kann. Beispielsweise wird beim Einführen der Schlosszunge in das Gurtschloss in einer Spule eines induktiven Sensors ein Strom induziert, wodurch dann das Schließen des Gurtschlosses erfasst werden kann.

Ein dritter Aspekt der vorliegenden Erfindung betrifft ein System zur Erfassung und Anzeige eines Schließzustands mindestens eines Sicherheitsgurts in einem Flugzeug, wobei das System mindestens einen Flugzeugsicherheitsgurt nach dem zweiten Aspekt der Erfindung und eine Empfangseinheit zum Empfangen des vom Sender übertragenen Schließzustands umfasst, sowie mindestens eine Anzeigeeinheit zum Anzeigen des Schließzustands von dem mindestens einen Flugzeugsicherheitsgurt. Das System umfasst also einen oder mehrere Flugzeugsicherheitsgurte gemäß dem zweiten Aspekt der Erfindung bzw. ein oder mehrere Gurtschlösser gemäß dem ersten Aspekt der Erfindung. Die sich aus dem Gurtschloss gemäß dem ersten Erfindungsaspekt und dem Flugzeugsicherheitsgurt gemäß dem zweiten Erfindungsaspekt ergebenden Merkmale und Vorteile sind der Beschreibung des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

Das System kann eine Vielzahl von Flugzeugsicherheitsgurten umfassen, welche jeweils ihren Schließzustand an eine gemeinsame Empfangseinheit senden. Dadurch kann zentral der Zustand von allen oder zumindest mehreren Flugzeugsicherheitsgurten erfasst werden.

Die Empfangseinheit kann beispielsweise auch als Gateway gestaltet und/oder bezeichnet werden. Beispielsweise können in einem Flugzeug mehrere solcher Empfangseinheiten verteilt sein, um auch bei größeren Passagierflugzeugen sämtliche Schließzustände aller Sicherheitsgurte erfassen zu können ohne dass der Sender des Gurtschlosses eine hohe Sendeleistung haben muss. Eine Empfangseinheit kann dabei mehreren Sicherheitsgurten zugeordnet sein und/oder einem bestimmten Sitzbereich, wie beispielsweise bestimmten Sitzreihen. Die Empfangseinheit kann dabei vorteilhaft Teil eines bereits vorhandenen Infotainment-Systems sein. Beispielsweise kann die Empfangseinheit ein Gateway eines vorhandenen WLAN-Netzes sein. Die Empfangseinheit kann vorteilhafterweise beispielsweise auch in den Gepäckfächern über den Passagieren, welche auch als Bins bezeichnet werden, angeordnet werden.

Die Anzeigeeinheit kann jeweilige Schließzustände, beispielsweise graphisch, für die jeweiligen Flugbegleiter anzeigen. Die Anzeigeeinheit kann zusätzlich oder alternativ zu einer optischen Ausgabe auch eine akustische und/oder haptische Ausgabe umfassen, wie beispielsweise eine Vibration oder ein Ton als Warnhinweis auf ein noch offenes Gurtschloss. Beispielsweise kann die Anzeigeeinheit einen Signalton erzeugen, wenn nach abgeschlossenen Startvorbereitungen noch ein Sicherheitsgurt geöffnet ist. Die Anzeigeeinheit kann ein dediziertes Gerät sein oder beispielsweise ein Monitor eines Flugkabinenüberwachungs- und/oder Infotainment-Systems. Beispielsweise kann die Anzeigeeinheit auch ein Bildschirm eines Tablets sein, welches von jeweiligen Flugbegleitern zur Überwachung und/oder Kontrolle der Flugzeugkabine genutzt wird. Ebenso kann beispielsweise auch die Empfangseinheit oder eine der mehreren Empfangseinheiten, welche auch als Gateway bezeichnet werden können, in diesem Tablet integriert sein. Die Anzeigeeinheit kann also beispielsweise ein Endgerät mit einem Bildschirm sein. Zusätzlich oder alternativ kann die Anzeigeeinheit auch als eine Empfangseinheit des Systems ausgebildet sein und/oder kabellos mit anderen Empfangseinheiten kommunizieren. Dafür kann die Anzeigeeinheit einen Sender und/oder einen Empfänger umfassen.

In weiterer vorteilhafter Ausgestaltung des dritten Erfindungsaspekts ist es vorgesehen, dass der Sensor einen Speicher aufweist, um die Identität der Empfangseinheit zu speichern. Alternativ oder zusätzlich kann die Sensoranordnung auch einen separaten Speicher aufweisen. Mittels des Speichers kann so eine dauerhafte Kopplung mit der Empfangseinheit sichergestellt werden. Dadurch kann beispielsweise ein Geräte-Pairing durchgeführt werden. Dadurch können Wechselwirkungen mit anderen Geräten, deren Identität nicht gespeichert ist, beispielsweise beim Empfang einer Empfangsbestätigung vermieden werden.

In weiterer vorteilhafter Ausgestaltung des dritten Erfindungsaspekts kann die Empfangseinheit eine wiederaufladbare Batterie aufweisen. Alternativ oder zusätzlich kann ebenso auch die Anzeigeeinheit eine wiederaufladbare Batterie aufweisen. Dadurch kann das System leicht nachgerüstet werden, da so nicht nur die Sensoranordnung des Gurtschlosses, sondern auch die Empfangseinheit und/oder die Anzeigeeinheit autark von anderen Bordsystemen betrieben werden kann.

In weiterer vorteilhafter Ausgestaltung des dritten Erfindungsaspekts ist es vorgesehen, dass die Empfangseinheit ferner konfiguriert ist, eine Empfangsbestätigung zu senden, wenn ein Schließzustand empfangen worden ist. Dafür kann die Empfangseinheit beispielsweise als Sende-/Empfangseinheit ausgebildet sein. Vorteilhafterweise wird dabei sowohl zum Senden als auch zum Empfangen die gleiche Antenne der Empfangseinheit genutzt. Die Empfangsbestätigung kann dabei gerätecodiert sein, so dass eine Vielzahl von Gurtschlössern in dem System vorgesehen sein können, welche jeweils individuell zugeordnete Empfangsbestätigungen gesendet bekommen können.

In weiterer vorteilhafter Ausgestaltung des dritten Erfindungsaspekts ist es vorgesehen, dass das System einen Speicher aufweist, der die empfangenen Schließzustände speichert, vorzugsweise in Verbindung mit der Zeit, zu der der Schließzustand bestimmt wurde. Damit kann auch nachträglich nachgewiesen werden, ob ein Sicherheitsgurt geschlossen war oder nicht. Insbesondere wenn hierzu korrespondierend die Zeit gespeichert wird, also beispielsweise ein Timelog vorgesehen ist, können so leicht ggf. ungerechtfertigte Schadensersatzansprüche abgewehrt werden. Der Speicher kann beispielsweise an der Empfangseinheit und/oder an der Anzeigeeinheit integriert sein. Alternativ oder zusätzlich kann auch bei der Sensoranordnung der Speicher oder eine weitere separate Komponente als Speicher vorgesehen sein. Insbesondere kann ein Endgerät vorgesehen sein, welches sowohl die Anzeigeeinheit als auch wenigstens eine Empfangseinheit sowie den Speicher umfasst. So kann das System besonders kostengünstig nachgerüstet werden. Alternativ kann der Speicher auch Teil eines bereits vorhandenen Bordsystems sein, wie beispielsweise ein Speicher in einer Kabinenüberwachungsvorrichtung und/oder eines Infotainment-Systems.

In weiterer vorteilhafter Ausgestaltung des dritten Erfindungsaspekts ist es vorgesehen, dass das System einen Speicher aufweist, der die Identität des Sensors speichert. Dadurch können jeweilige Schließzustände einem Sensor bzw. einem bestimmten Gurtschloss zugeordnet werden. Darüber hinaus wird auch hierdurch ein Pairing jeweiliger Gurtschlösser mit der Empfangseinheit erleichtert. Insbesondere kann so ein permanentes Pairing gespeichert werden. Durch einen solchen Speicher können jeweilige Signale einem jeweiligen Sensor bzw. einem Gurtschloss zugeordnet werden. Der Speicher kann dabei der gleiche Speicher sein, der die empfangenen Schließzustände speichert. Dadurch ist die Komplexität des Systems besonders gering.

Es kann vorgesehen werden, dass alle jeweiligen Speicher bei wenigstens zwei Komponenten des Systems, also beispielsweise bei den Empfangseinheiten, bei der Anzeigeeinheit und/oder den Gurtschlössern bzw. Sensoranordnungen, vorgesehen sind. Dadurch werden die jeweiligen Zielschließzustände redundant gespeichert, so dass auch bei Ausfall eines Teils des Systems noch der jeweilige Schließzustand der Sicherheitsgurte nachweisbar ist.

In weiterer vorteilhafter Ausgestaltung des dritten Erfindungsaspekts ist es vorgesehen, dass die Empfangseinheit konfiguriert ist, den Schließzustand an die mindestens eine Anzeigeeinheit kabellos zu übertragen. So können beispielsweise jeweilige Empfangseinheiten in der Flugzeugkabine fest integriert werden. Dabei sind diese leicht nachzurüsten, da ggf. keine weitere Verkabelung, insbesondere wenn die Empfangseinheiten mit einer Batterie ausgerüstet sind, notwendig ist. Dadurch kann sichergestellt werden, dass jeweilige Empfangseinheiten immer in ausreichend kleinem Abstand zu den jeweiligen zugeordneten Gurtschlössern angeordnet sind, so dass sie deren Signale zuverlässig empfangen können. Bei einer Veränderung der Bestuhlung kann die Positionierung der Empfangseinheiten dann einfach angepasst werden. Die Anzeigeeinheit kann beispielsweise als tragbares Endgerät für die jeweiligen Flugbegleiter ausgebildet sein, so dass diese die jeweiligen Schließzustände auch während anderer Tätigkeiten, insbesondere Tätigkeiten verbunden mit einer Bewegung durch die Flugzeugkabine, kontrollieren können. Das System kann dabei auch mehrere Anzeigeeinheiten umfassen, welche jeweils alle oder auch nur Teile der beschriebenen Funktionalitäten aufweisen.

In weiterer vorteilhafter Ausgestaltung des dritten Erfindungsaspekts ist es vorgesehen, dass die Empfangseinheit ferner konfiguriert ist, die Übertragung des Schließzustands an die Anzeigeeinheit auf Anfrage der Anzeigeeinheit durchzuführen. Hierdurch kann der Energieverbrauch der Empfangseinheit besonders gering sein. Beispielsweise können jeweilige Veränderungen der Schließzustände zentral an der Empfangseinheit gesammelt werden und zudem beispielsweise unmittelbar vor Abschluss der Startvorbereitungen erst auf Anfrage an die Anzeigeeinheit übertragen werden. So kann der Stromverbrauch an der Anzeigeeinheit ebenfalls gering sein, da diese bis zu dem Zeitpunkt, zu dem die Daten zu den Schließzuständen benötigt werden, deaktiviert sein kann.

Ebenso können auch jeweilige Sensoren der Gurtschlösser erst oder zusätzlich auf Anfrage durch die Empfangseinheit und/oder die Anzeigeeinheit ihren Schließzustand übertragen. Die Sensoranordnung kann also so ausgebildet sein, dass sie auf Empfang eines Aktivierungssignals hin aktiviert wird und den jeweiligen Schließzustand erfasst. Auch hierdurch kann der Stromverbrauch der Sensoranordnung besonders gering sein. Beispielsweise kann ein jeweiliges Aktivierungssignal auch von der Anzeigeeinheit an die Empfangseinheit übertragen werden und dann von der Empfangseinheit an die Sensoranordnung der jeweiligen Gurtschlösser. Dadurch kann zudem eine Aktivierung besonders zuverlässig sichergestellt werden, da die jeweiligen Empfangseinheiten beispielsweise in einem im Wesentlichen fixen Abstand zu den jeweiligen Gurtschlössern installiert sein können.

Ein vierter Aspekt der Erfindung betrifft ein Verfahren zur Erfassung eines Schließzustands von mindestens einem Flugzeugsicherheitsgurt nach dem ersten. Aspekt der Erfindung, wobei das Verfahren als Schritte das Bereitstellen der Sensoranordnung im Inneren des mindestens einen Gurtschlosses, Erfassen der Schließzustände unter Verwendung des jeweiligen Sensors der Sensoranordnung und Übertragen des erfassten Schließzustands unter Verwendung des Sensors der Sensoranordnung aufweist. Das Verfahren eignet sich also zum Betreiben des Gurtschlosses gemäß dem ersten Erfindungsaspekt bzw. des Flugzeugsicherheitsgurts gemäß dem zweiten Erfindungsaspekt. Die sich aus dem Gurtschloss gemäß dem ersten Erfindungsaspekt und dem Flugzeugsicherheitsgurt gemäß dem zweiten Erfindungsaspekt ergebenden Merkmale und Vorteile sind den Beschreibungen des ersten bzw. des zweiten Erfindungsaspekts zu entnehmen, wobei vorteilhafte Ausgestaltungen des ersten Erfindungsaspekts bzw. des zweiten Erfindungsaspekts als vorteilhafte Ausgestaltungen des vierten Erfindungsaspekts und umgekehrt anzusehen sind.

Darüber hinaus eignet sich das Verfahren gemäß dem vierten Erfindungsaspekt auch zum Betreiben des Systems gemäß dem dritten Erfindungsaspekts, wobei auch hier die sich aus dem System gemäß dem dritten Erfindungsaspekt ergebenden Merkmale und Vorteile der Beschreibung des dritten Erfindungsaspekts zu entnehmen sind, wobei vorteilhafte Ausgestaltungen des dritten Erfindungsaspekts vorteilhafterweise durch das Verfahren gemäß des vierten Erfindungsaspekts betrieben werden und umgekehrt. Dabei kann zusätzlich der Schritt des Übertragen des Schließzustands an die wenigstens eine Empfangseinheit und von der Empfangseinheit an die Anzeigeeinheit vorgesehen sein.

In weiterer vorteilhafter Ausgestaltung des vierten Erfindungsaspekts ist es vorgesehen, dass das Verfahren ferner einen Schritt zum Empfangen des übertragenen Schließzustands an eine Empfangseinheit und einen Schritt zum Anzeigen des Schließzustands von dem mindestens einen Flugzeugsicherheitsgurt an einer Anzeigeeinheit aufweist. Dadurch können die jeweiligen Schließzustände einfach durch jeweilige Flugbegleiter kontrolliert werden. Das Anzeigen kann hier insbesondere ein visuelles Anzeigen sein. Alternativ oder zusätzlich kann die Anzeige aber auch beispielsweise mittels eines akustischen und/oder haptischen Signals erfolgen. Vorzugsweise kann die Anzeigeeinheit beispielsweise einen schematischen Sitzplatzplan aufweisen, auf welchem die jeweiligen Schließzustände dargestellt sind, beispielsweise durch farbliche Kodierung. Beispielsweise kann ein als grün angezeigter Sitzplatz einen geschlossenen Sicherheitsgurt signalisieren und ein als rot angezeigter Flugzeugsitz einen geöffneten Sicherheitsgurt und optional auch ein fehlendes Empfangen eines Sensorsignals signalisieren.

In weiterer vorteilhafter Ausgestaltung des vierten Erfindungsaspekts erfolgt das Übertragen des erfassten Schließzustands kabellos, insbesondere mittels Bluetooth, vorzugsweise mittels des Bluetooth-Low-Energy-Standards.

In weiterer vorteilhafter Ausgestaltung des vierten Erfindungsaspekts ist es vorgesehen, dass der Sender bei einer Änderung des Schließzustands von einem passiven in einen aktiven Zustand übergeht, und im aktiven Zustand den erfassten Schließzustand überträgt, wobei der Sender nach der Übertragung des erfassten Schließzustands in einen passiven Zustand übergeht. Alternativ oder zusätzlich kann der Sender den erfassten Schließzustand auch auf Empfang eines Aktivierungssignals hin übertragen, wie dies bereits vorher geschildert worden ist.

In weiterer vorteilhafter Ausgestaltung des vierten Erfindungsaspekts ist es vorgesehen, dass der Sender nach dem Übertragen des Schließzustands solange in dem aktiven Zustand verbleibt, bis eine Empfangsbestätigung des zuvor übertragenen Schließzustands am Sender erhalten wird. Dadurch wird die Zuverlässigkeit der Erfassung und auch deren Anzeige und/oder Speicherung erhöht.

In weiterer, nicht erfinderischen Ausgestaltung, ist es vorgesehen, dass das Erfassen des Schließzustands auf einer induktiven Messung, einer Messung des elektrischen Widerstands oder, gemäß der Erfindung, einer mechanischen Messung beruht. Bei der mechanischen Messung kann insbesondere ein mechanischer Mikroschalter verwendet werden, welcher optional gleichzeitig durch dessen Betätigung einen elektrischen Schaltkreis der Sensoranordnung schließt. Nach erfolgter Übertragung kann sich die Sensoranordnung dann selbsttätig abschalten, insbesondere nach Verstreichen einer vorbestimmten Zeitdauer. Alternativ oder zusätzlich kann sich die Sensoranordnung auch erst nach Empfang einer Empfangsbestätigung abschalten, wobei optional nach Ausbleiben einer Empfangsbestätigung innerhalb einer bestimmten Zeitdauer der Schließzustand erneut übertragen wird. Der mechanische Schalter kann beispielsweise durch eine in das Gurtschloss eingeführte und ggf. dort verrastete Schlosszunge betätigt, beispielsweise gedrückt, werden.

In weiterer, nicht erfinderischen Ausgestaltung, ist es vorgesehen, dass die induktive Messung auf einer Messung eines magnetischen Feldes beruht, dass durch einen Permanentmagneten an der Schlosszunge erzeugt wird, wobei das magnetische Feld hinreichend stark und derart ausgerichtet ist, dass es von dem Sensor zum Erfassen des Schließzustandes verwendet werden kann.

Weiterhin betrifft die Erfindung ein Verfahren zur Erfassung und Anzeige eines Schließzustands mindestens eines Sicherheitsgurts in einem Flugzeug nach dem zweiten Erfindungsaspekt, wobei das Verfahren alle Verfahrensschritte gemäß dem zweiten Erfindungsaspekt aufweisen kann, ein Empfangen des vom Sender übertragenen Schließzustands an eine Empfangseinheit und ein Anzeigen des Schließzustands von dem Schließzustand des mindestens einen Flugzeugsicherheitsgurtes an der mindestens einen Anzeigeeinheit. Dabei kann es auch vorgesehen sein, den Schließzustand von mehreren Sicherheitsgurten zu empfangen und diese jeweils anzuzeigen.

In weiterer vorteilhafter Ausgestaltung des Verfahrens ist es ferner vorgesehen, die Identität der Empfangseinheit in einem Speicher des Sensors zu speichern.

In weiterer vorteilhafter Ausgestaltung des Verfahrens ist es vorgesehen, eine Empfangsbestätigung durch die Empfangseinheit zu senden. Diese Empfangsbestätigung kann insbesondere durch die Sensoranordnung bzw. den Sender des Gurtschlosses empfangen werden, woraufhin der Sender, Sensor und/oder die gesamte Sensoranordnung deaktiviert werden kann. Deaktivieren kann dabei insbesondere bedeuten, dass der Sender, Sensor und/oder die Sensoranordnung in einen Zustand ohne oder mit geringerem Stromverbrauch versetzt wird.

In weiterer vorteilhafter Ausgestaltung des Verfahrens ist ein Speichern der empfangenen Schließzustände in einem Speicher, vorzugsweise in Verbindung mit der Zeit, zu der der Schließzustand bestimmt wurde, vorgesehen. Dadurch können jeweilige Schließzustände auch nachträglich noch nachgewiesen werden.

In weiterer vorteilhafter Ausgestaltung des Verfahrens ist es vorgesehen, die Identität des Sensors in einem Speicher zu speichern.

In weiterer vorteilhafter Ausgestaltung des Verfahrens ist es vorgesehen, den Schließzustand kabellos an die mindestens eine Anzeigeeinheit durch die Empfangseinheit zu übertragen. Hierzu kann die Empfangseinheit einen Sender umfassen und die Anzeigeeinheit einen Empfänger.

In weiterer vorteilhafter Ausgestaltung des Verfahrens ist es ferner vorgesehen, eine Anfrage der Anzeigeeinheit zu senden und anschließend den Schließzustand des Sicherheitsgurts an die anfragende Anzeigeeinheit zu senden, wobei dieser Schließzustand dabei insbesondere von der Empfangseinheit, welche bereits die Schließzustände empfangen hat, übertragen werden kann oder aber die Schließzustände erst dann bei den Gurtschlössern abgefragt werden, entweder durch jeweilige Empfangseinheiten oder direkt durch die Anzeigeeinheit. Verweise auf Ausführungsformen in der Beschreibung, die nicht unter den Anwendungsbereich der beigefügten Ansprüche fallen, stellen lediglich mögliche exemplarische Ausführungen dar und sind daher nicht Teil der vorliegenden Erfindung

### FIGURENBESCHREIBUNG

Figur 1 zeigt in einer schematischen Perspektivansicht ein Gurtschloss für einen Flugzeugsicherheitsgurt;
Figur 2 zeigt in einer schematischen Ansicht teilweise transparent dargestellt das Gurtschloss gemäß Figur 1;
Figur 3 zeigt in einer schematischen Explosionsansicht das Gurtschloss gemäß Figur 1;
Figur 4 zeigt in einer weiteren schematischen Perspektivansicht das Gurtschloss gemäß Figur 1, wobei dieses teilweise transparent dargestellt ist;
Figur 5 veranschaulicht schematisch ein System zur Erfassung und Anzeige eines Schließzustands mehrerer Sicherheitsgurte in einem Passagierflugzeug;
Figur 6 zeigt in einer schematischen Seitenansicht eine weitere Ausführungsform eines Flugzeugsicherheitsgurts in einem geschlossenen Zustand;
Figur 7 zeigt in einer schematischen Seitenansicht den Flugzeugsicherheitsgurt gemäß Figur 6 ebenfalls in einem geschlossenen Zustand;
Figur 8 zeigt in einer schematischen Seitenansicht den Flugzeugsicherheitsgurt gemäß Figur 6 in einem geöffneten Zustand;
Figur 9 zeigt eine rückseitige schematische Detailansicht des Flugzeugsicherheitsgurts gemäß Figur 6; und
Figur 10 zeigt in einer perspektivischen, schematischen Unteransicht ein Gurtschloss mit eingesteckter Schlosszunge.

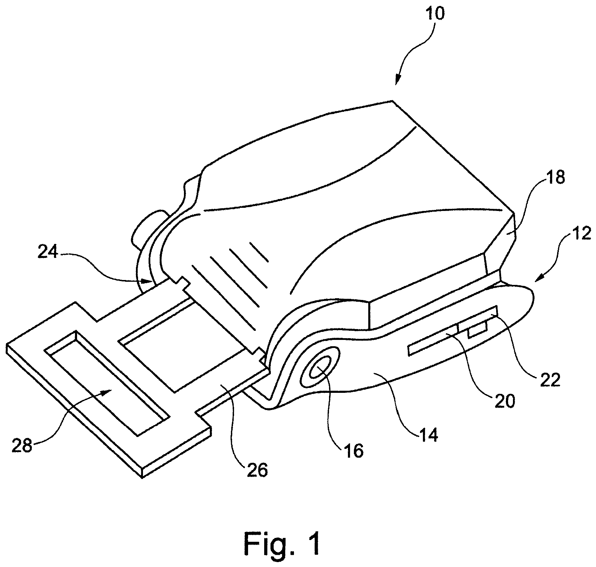

Figur 1 zeigt in einer schematischen Perspektivansicht ein Gurtschloss 10 für einen Flugzeugsicherheitsgurt. Das Gurtschloss 10 umfasst dabei einen Hauptkörper 12, der eine Grundplatte 14 und ein an der Grundplatte 14 über das Drehgelenk 16 drehbar gelagertes Plattenelement 18 umfasst. Weiterhin ist zu erkennen, dass durch einen Schlitz 20 ein Blockierstift 22 geführt ist, an welchem ein Gurtband des Sicherheitsgurts befestigt werden kann. Der Blockierstift 22 erlaubt dabei eine Länge des Sicherheitsgurts einzustellen.

Das Gurtschloss 10 weist dabei eine Aufnahmeöffnung 24 auf, in welcher gemäß Figur 1 eine Schlosszunge 26 eingeführt ist. Die Schlosszunge 26 verrastet dabei in dem Gurtschloss 10, wodurch dann der Flugzeugsicherheitsgurt sicher geschlossen ist. Ein geschlossener Zustand bzw. ein Schließzustand ist also ein Zustand, in welchem das Gurtschloss 10 mit der Schlosszunge 26 so verbunden ist, dass der Sicherheitsgurt einen Passagier an einem Sitz zurückhalten kann, insbesondere im Falle eines Unfalls. Die Schlosszunge 26 weist weiterhin eine Durchgangsöffnung 28, durch welche ein weiteres Gurtband geführt sein kann. Auch dieses Gurtband kann fest mit dem Flugzeugsitz verbunden werden.

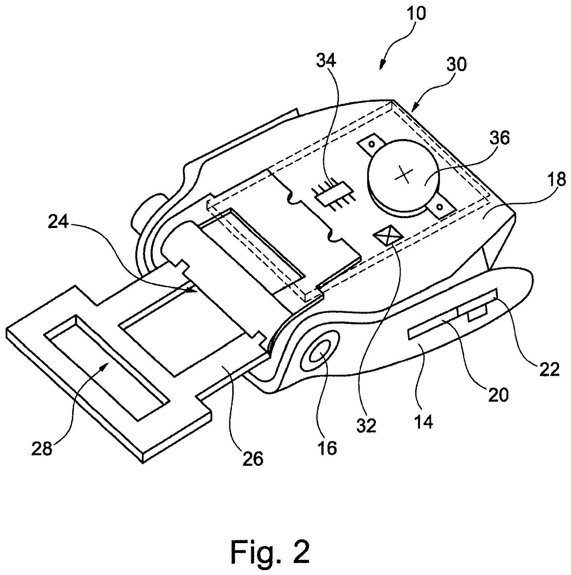

In der schematischen Ansicht des Gurtschlosses 10 gemäß Figur 2 ist durch die teilweise transparente Darstellung zu erkennen, dass das Gurtschloss 10 eine Sensoranordnung 30 aufweist. Die Sensoranordnung 30 umfasst einen Sensor 32 zum Erfassen eines Schließzustands des Flugzeugsicherheitsgurts. Im Wesentlichen kann der Sensor 32 also erfassen, ob die Schlosszunge 26 in der Aufnahmeöffnung 24 des Gurtschlosses 10 aufgenommen ist und die Schlosszunge 26 mit dem Gurtschloss 10 verrastet und der Sicherheitsgurt demnach verschlossen bzw. verriegelt ist. Der Sensor 32 kann beispielsweise als mechanischer Mikroschalter ausgebildet sein, welcher durch die eingeführte Schlosszunge 26 durch Drücken betätigt wird.

Weiterhin umfasst die Sensoranordnung 30 einen Sender 34 zum Übertragen des erfassten Schließzustandes und eine Stromversorgung zum Betreiben des Sensors 32 und des Senders 34 in Form einer Batterie 36, insbesondere einer Knopfzelle. Der Sensor 32 kann dabei insofern mittels der Batterie 36 betrieben werden, als dass der Sensor 32 einen Stromkreis schließt und entsprechend Strom von der Batterie 36 zu dem Sender 34 fließt. Es kann sich aber auch um einen aktiven Sensor 32 handeln, welcher von der Batterie 36 mit Strom versorgt werden muss, um den Schließzustand erfassen zu können. Insgesamt kann die Sensoranordnung 30 auf einer Platine angeordnet sein, welche jeweilige elektrische Leitungen und Verbindungen, notwendige Steuergeräte, Mikrocontroller, Speicher und eine Antenne aufweisen kann.

Der Sender 34 ist beispielsweise als kabelloser Sender 34 ausgebildet, welcher mittels des Bluetooth-low-Energy-Standards den Schließzustand überträgt. Dabei kann die Sensoranordnung 30 so ausgebildet sein, dass der Sender 34 nur bei einer Änderung des Schließzustands, d.h. bei einem Öffnen oder Schließen des Sicherheitsgurtes aktiviert wird. Mittels des Gurtschlosses 10 kann so autark bei geringem Gewicht ein jeweiliger Schließzustand des Gurtschlosses 10 übertragen und damit angezeigt werden. Da das Gurtschloss 10 hierfür keine Anbindung mittels Kabel an andere Bauteile benötigt, kann das Gurtschloss 10 leicht nachgerüstet werden. Insbesondere kann lediglich das Plattenelement 18 ausgetauscht werden, und ansonsten ein bestehender Sicherheitsgurt des Passagierflugzeugs bei der Nachrüstung im Flieger gelassen werden.

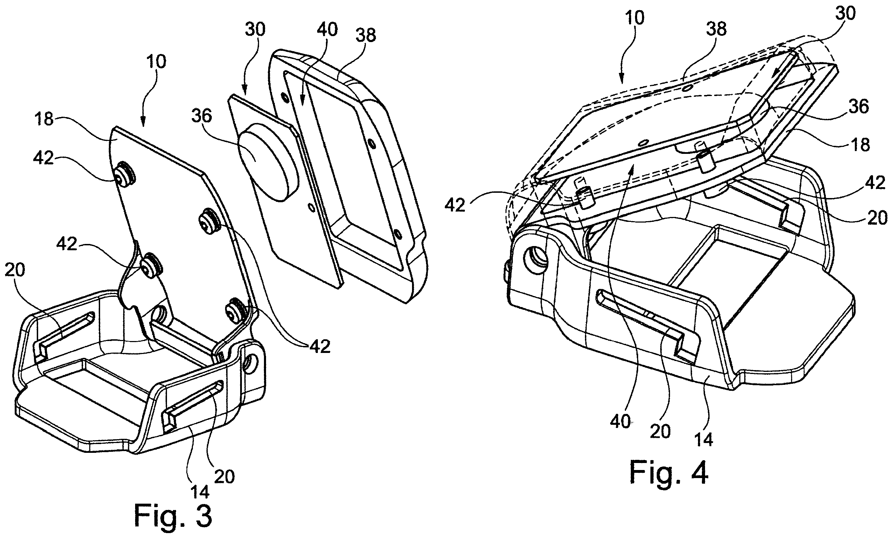

In der schematischen Explosionsansicht gemäß Figur 3 und der schematischen Perspektivansicht gemäß Figur 4, wobei hier erneut einige Teile transparent dargestellt sind, wird die Anordnung der Sensoranordnung 30 an dem Gurtschloss 10 besonders deutlich dargestellt. Dabei sind in den Figuren 3 und 4 einige Bauteile des Gurtschlosses 10 nicht oder mit geringerem Detailgrad dargestellt, um die Ansicht zu vereinfachen.

Wie deutlich in Figur 3 zu erkennen ist, besteht der obere, drehbare Teil des Gurtschlosses 10 aus dem Plattenelement 18 sowie einer daran befestigten Abdeckplatte 38. Das Plattenelement 18 und die Abdeckplatte 38 bilden zusammen einen Hohlraum 40, in welchem die Sensoranordnung 30 angeordnet ist. Das Plattenelement 18 kann dabei, ebenso wie die Grundplatte 14, aus einem metallischen Werkstoff bestehen, wie beispielsweise Aluminium. Dadurch ist das Gurtschloss 10 im Wesentlichen genauso groß und schwer wie bekannte Gurtschlösser und kann auch im Falle eines Unfalls die auf den Sicherheitsgurt wirkenden Lasten sicher aufnehmen.

Alternativ kann die Abdeckplatte 38 auch beispielsweise an der Grundplatte 14 an einer Unterseite bzw. dem angeschnallten Passagier zugewandten Seite des Gurtschlosses 10 befestigt sein, also beispielsweise an der Grundplatte 14. Dann wird die Sensoranordnung 30 beim Öffnen und/oder Schließen des Gurtschlosses 10 nicht mit dem Plattenelement 18 mitbewegt, wodurch diese besonders wenig Erschütterung ausgesetzt ist. Bei einer Anordnung der Abdeckplatte 38 an dem Plattenelement 18 kann dagegen das Gurtschloss 10 besonders flach an einer anzuschnallenden Person anliegen. Im Übrigen kann auch die Abdeckplatte 38 flach ausgebildet sein und keine Ausnehmung aufweisen, wie dies in den Figuren dargestellt ist. Stattdessen kann dann beispielsweise das Plattenelement 18 bzw. die Grundplatte 14 eine Ausnehmung aufweisen, sodass ebenfalls durch ein jeweiliges Verbinden der Hohlraum 40 gebildet wird, in welchem die Sensoranordnung 30 aufgenommen werden kann.

Die Abdeckplatte 38 kann beispielsweise aus einem Kunststoff gebildet sein. So wird das Funksignal des Senders 34 nicht oder nur sehr geringfügig abgeschirmt, wodurch die Reichweite des Senders 34 besonders hoch sein kann bzw. der Sender 34 für eine bestimmte Reichweite nur eine sehr geringe Leistung benötigt. Gleichzeitig ist die Sensoranordnung 30 so sicher in ein Gehäuse geschützt aufgenommen. Durch die Verwendung eines Kunststoffes als Werkstoff kann die Abdeckplatte 38 zudem besonders leicht sein.

Die Abdeckplatte 38 ist im gezeigten Beispiel mittels vier Verschraubungen 42 mit dem Plattenelement 18 verbunden. Dadurch wird eine einfache und sichere Verbindung gewährleistet. Gleichzeitig kann die Abdeckplatte 38 leicht von dem Plattenelement 18 entfernt werden, um Zugang zu der Sensoranordnung 30 zu erlangen, beispielsweise zum Austausch der Batterie 36. Dieser Zugang ist dabei nur im geöffneten Zustand des Gurtschlosses 10 möglich, da die Verschraubungen 42 in geschlossenem Zustand des Gurtschlosses 10 dessen Innenseite zugewandt sind und deswegen nicht ohne Öffnen von außen erreichbar sind. Dadurch sind die Verschraubungen 42 vor unerwünschten Manipulationen geschützt.

Alternativ kann die Abdeckplatte 38 auch beispielsweise mit dem Plattenelement 18 verklebt sein, was eine besonders leichte und kostengünstige Verbindung ist. Eine weitere alternative Verbindung ist eine Schnappverbindung, beispielsweise durch elastische Hakenelemente an der Abdeckplatte 38. Dadurch ist ein Entfernen der Abdeckplatte 38 besonders leicht und schnell möglich. Zudem kann so die Abdeckplatte 38 mit der Sensoranordnung 30 an bereits bestehende Gurtschlösser 10 nachgerüstet werden, ohne dass dafür notwendigerweise ein bereits bestehendes Plattenelement 18 modifiziert werden muss.

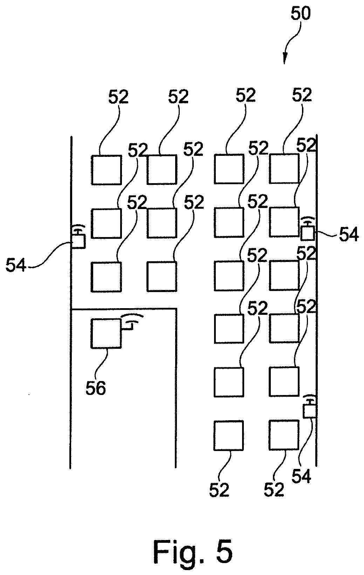

Figur 5 veranschaulicht ein System 50 zur Erfassung und Anzeige eines Schließzustands mehrerer Sicherheitsgurte in einem Passagierflugzeug. Dafür ist ein Teil eines Flugzeugrumpfes geschnitten in einer schematischen Draufsicht dargestellt. Zu erkennen sind mehrere in Sitzreihen angeordnete Flugzeugsitze 52, welche jeweils mit einem nicht dargestellten Flugzeugsicherheitsgurt ausgerüstet sind und auch als Sitze bezeichnet werden können, wobei der Flugzeugsicherheitsgurt ein Gurtschloss 10 gemäß Figuren 1 bis 4 aufweist. Weiterhin umfasst das System 50 mehrere Empfangseinheiten 54 zum Empfangen des von jeweiligen Sendern 34 übertragenen Schließzustands der jeweiligen Sicherheitsgurte der jeweiligen Flugzeugsitze 52. Die Empfangseinheiten 54 sind dabei jeweils so angeordnet, dass sie von jeweiligen zugeordneten Flugzeugsitzen 52 zuverlässig die Signale des Senders 34 empfangen können und die notwendige Sendeleistung gleichzeitig gering ist. Dabei können die jeweiligen Funksignale kodiert sein, so dass jedes Funksignal einem spezifischen Flugzeugsitz 52 zugeordnet sein kann.

Weiterhin umfasst das System 50 mindestens eine Anzeigeeinheit 56 zum Anzeigen des Schließzustands von den jeweiligen Flugzeugsicherheitsgurten. Die Anzeigeeinheit 56 kann beispielsweise ein Kabinenüberwachungssystem sein, welche einen Bildschirm aufweist. Die jeweiligen Schließzustände der jeweiligen Flugzeugsitze 52 werden dabei von den Empfangseinheiten 54 ebenfalls kabellos an die Anzeigeeinheit 56 übertragen. Dadurch kann an der Anzeigeeinheit 56 beispielsweise in einer Darstellung ähnlich zu der Figur 5 angezeigt werden, welche der jeweiligen Flugzeugsitze 52 einen geschlossenen Sicherheitsgurt haben und welche nicht.

Die Anzeigeeinheit 56 kann dabei beispielsweise auch als mobiles Handgerät ausgebildet sein, welches von einem Flugzeugbegleiter während der Arbeit in der Flugzeugkabine mitgeführt werden kann. Dadurch können auch bei anderen Tätigkeiten weiter die Schließzustände der Sicherheitsgurte überwacht werden. Dadurch ist es leicht und zeitsparend sowie zuverlässig für die Flugbegleiter möglich, zu kontrollieren, ob alle Passagiere angeschnallt sind, beispielsweise vor dem Start des Flugzeugs.

Die Empfangseinheit 54 und die Anzeigeeinheit 56 können dabei auch autark mit Strom versorgt werden, beispielsweise durch eine integrierte wiederaufladbare Batterie. Alternativ können diese aber auch an das Bordnetz angeschlossen sein. Im Vergleich zu einem Anschluss jeweiliger Gurtschlösser an das Bordnetz mittels jeweils eines Kabels ist dabei der Aufwand zur Integration in der Flugzeugkabine wesentlich geringer.

Sowohl die jeweiligen Sensoranordnung 30 als auch die Empfangseinheiten 54 und die Anzeigeeinheit 56 können einen Speicher aufweisen, um die jeweiligen Schließzustände abzuspeichern, vorzugsweise mit einem Zeitstempel. Dadurch kann auch nach Beenden eines Flugs festgestellt werden, wann welche Sicherheitsgurte geschlossen oder geöffnet waren, um beispielsweise ungerechtfertigte Schadenersatzansprüche abzuwehren. Durch das Vorsehen des Speichers in mehreren der Teile des Systems 50 kann dabei eine redundante Speicherung bereitgestellt werden und insbesondere bei einem Versagen der jeweiligen Funkverbindungen die entsprechenden Schließzustände auch nachträglich ausgelesen werden. Zum Gewicht- und Kostensparen können aber auch nur Speicher in bestimmten Teilen des Systems 50 vorgesehen werden, beispielsweise ausschließlich in der Anzeigeeinheit 56 und/oder den Empfangseinheiten 54. Dadurch wird auch insgesamt das Gewicht des Systems 50 reduziert.

Zur Energieeinsparung kann es vorgesehen sein, die jeweiligen Sender 34 nur zu aktivieren, wenn sich der jeweilige Schließzustand der jeweiligen Gurtschlösser 10 ändert. Dadurch kann eine besonders lange Betriebsdauer erreicht werden, ohne dass die jeweiligen Batterien 36 ausgewechselt werden müssen. Dadurch werden Wartungs- und Betriebskosten gesenkt.

Um dennoch eine zuverlässige Übertagung der Schließzustände sicherzustellen, kann dabei der Sender 34 solange aktiv sein, bis er eine Empfangsbestätigung von der Empfangseinheit 54 erhält. Dazu kann der Sender 34 auch dazu ausgebildet sein, jeweilige Empfangsbestätigungen zu empfangen. Sollte der Sender 34 keine Empfangsbestätigung erhalten, kann in periodischen Abständen der Schließzustand erneut übertragen werden. Alternativ oder zusätzlich können die jeweiligen Sender 34 und/oder Sensoren 32 auch durch ein Aktivierungssignal der Empfangseinheiten 54 bzw. der Anzeigeeinheit 56 aktiviert werden. Dann werden die Schließzustände nur auf Anfragen übertragen und/oder erfasst, beispielsweise unmittelbar vor dem Start des Flugzeugs. Auch so kann der Stromverbrauch reduziert werden.

Alternativ oder zusätzlich kann die Anzeigeeinheit 56 auch ein Aktivierungssignal an die Empfangseinheiten 54 verschicken, damit diese Informationen über die Schließzustände nur auf Anfrage zu übertragen. Damit kann auch Energie bei den Empfangseinheiten 54 gespart werden, sodass auch hier eine Stromversorgung, beispielsweise in Form einer Batterie, nur sporadisch geladen und/oder gewechselt werden muss.

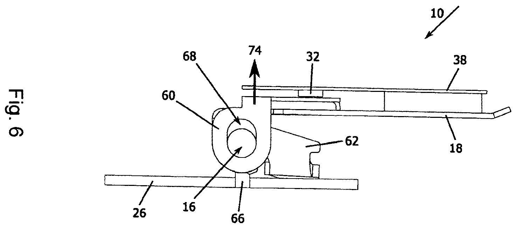

Fig. 6 bis Fig. 8 zeigen in jeweiligen schematischen Seitenansichten einen Flugzeugsicherheitsgurt, wobei hier nur ein Gurtschloss 10 und eine darin eingeführte Schlosszunge 26 dargestellt sind. Das Gurtschloss 10 ist dabei im Wesentlichen ähnlich zu dem bereits für die Fig. 1 bis Fig. 4 geschilderten Ausführungsbeispiel. Entsprechend wird sich im Folgenden darauf beschränkt, Unterschiede zu erläutern. Ähnliche Teile mit ähnlicher Funktion werden dabei mit identischen Bezugszeichen versehen.

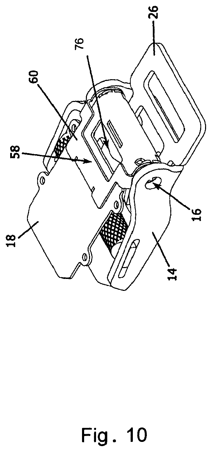

Das Gurtschloss 10 gemäß dieser weiteren Ausführungsform weist zusätzlich ein Betätigungselement 60 auf, welches gemeinsam mit dem Plattenelement 18 an dem Drehgelenk 16 mittels eines Bolzens an der Grundplatte 14 gelagert ist. In den Fig. 6 bis Fig. 8 ist dabei die Grundplatte 14 zur Übersichtlichkeit nicht dargestellt. Wie dabei auch in der schematischen Perspektivansicht gemäß Fig. 10 zu erkennen ist, liegt das Betätigungselement 60 mit einem flachen Bereich 58 auf dem Plattenelement 18 auf. Mittels des Plattenelements 18 kann ein Rastelement 62 durch Anheben des Plattenelements 18 von der Grundplatte 14 rotiert werden. In dem geschlossenen Zustand, wie in Fig. 6 gezeigt, ist das Rastelement 62 in einer Durchgangsöffnung der Schlosszunge 26 eingeführt und verriegelt diese mit dem Gurtschloss 10. Dadurch kann entsprechend ein Anschnallgurt geschlossen sein.

Vorliegend ist der Flugzeugsicherheitsgurt mittels einer (nicht dargestellten) Feder in die in Fig. 6 gezeigte Stellung vorgespannt. Das heißt, insofern keine Betätigungskräfte wirken, kehren das Plattenelement 18, das Betätigungselement 60 und das Rastelement 62 selbsttätig in diese Stellung zurück.

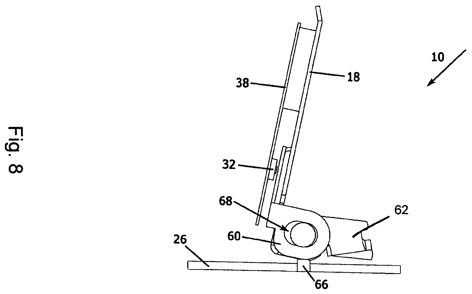

Fig. 8 zeigt einen geöffneten Zustand des Flugzeugsicherheitsgurts. Dabei wurde das Plattenelement 18 soweit rotiert, dass das Rastelement 62 aus der Durchgangsöffnung der Schlosszunge 26 gehoben wurde. Entsprechend ist die Schlosszunge 26 nicht mehr mit dem Gurtschloss 10 verriegelt und kann aus diesem herausgezogen werden. Obwohl die Schlosszunge 26 vorliegend noch im Gurtschloss 10 eingeführt ist, wird deshalb vom geöffneten Zustand gesprochen, da ein Fluggast so nicht mehr angeschnallt und damit gesichert ist.

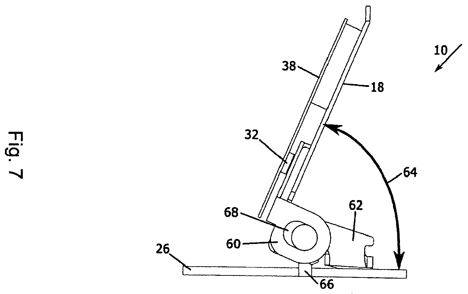

Um Fehlöffnungen des Gurtes zu vermeiden, wird dabei die Verriegelung erst ab einem bestimmten Grenzwinkel geöffnet. Beispielsweise kann das Rastelement 62 erst von der Schlosszunge 26 gelöst sein, wenn ein Innenwinkel zwischen der Haupterstreckungsebene des Plattenelements 18 und der Grundplatte 14 beispielsweise mehr als 85° beträgt. Der entsprechende Winkel ist dabei in Fig. 7 durch einen Pfeil 64 kenntlich gemacht. Vorzugsweise rotiert das Rastelement 62 erst mit dem Plattenelement 18 ab Überschreiten dieses Winkels mit, wodurch bei kleineren Innenwinkel die Struktur des Rastelements 62 nur auf eine Position und dortige Belastungen ausgelegt werden muss. Ein Zustand, bei welchem das Plattenelement 18 bereits angehoben wurde, aber das Rastelement 62 dennoch noch die Schlosszunge 26 verriegelt, ist dabei in Fig. 7 veranschaulicht.

Der Flugzeugsicherheitsgurt kann also einen Zustand haben, bei dem die Schlosszunge 26 in dem Gurtschloss eingeführt ist und mittels des Rastelements 62 verriegelt ist. Hierbei handelt es sich um einen geschlossenen Zustand, in dem der Passagier gesichert ist. Der Flugzeugsicherheitsgurt kann einen weiteren Zustand haben, bei dem die Schlosszunge 26 in dem Gurtschloss eingeführt ist, aber nicht mittels des Rastelement 62 verriegelt ist, beispielsweise weil das Plattenelement 18 über den Grenzwinkel hinaus von der Grundplatte 14 wegrotiert wurde. Hierbei handelt es sich um einen geöffneten Zustand, in dem der Passagier nicht gesichert ist. Weiterhin kann der Flugzeugsicherheitsgurt noch einen weiteren Zustand haben, bei dem die Schlosszunge 26 in dem Gurtschloss eingeführt ist und mittels des Rastelements 62 verriegelt ist, beispielsweise weil das Plattenelement 18 zwar rotiert wurde, aber nicht über den Grenzwinkel hinaus von der Grundplatte 14 wegrotiert ist. Alle rotatorischen Stellungen, in welchen das Rastelement 62 die eingeführte Schlosszunge mit dem Gurtschloss 10 verriegelt, können dabei als erster Rotationsbereich bezeichnet werden. Alle rotatorischen Stellungen, in welchen das Rastelement 62 die eingeführte Schlosszunge mit dem Gurtschloss 10 nicht verriegelt, können dabei als zweiter Rotationsbereich bezeichnet werden. In einem weiteren Zustand kann die Schlosszunge 26 nicht in das Gurtschloss 10 eingeführt sein. Dabei ist der Flugzeugsicherheitsgurt in dem geöffneten Zustand, unabhängig von der Stellung des Plattenelements 18 und des Rastelement 62, da der Passagier dann ungesichert ist.

Diese komplexen Zusammenhänge können bei der vorliegenden Ausführungsform des Flugzeugsicherheitsgurts mit einem einzigen Sensor sinnvoll erfasst werden. Dafür weist die Schlosszunge 26 seitliche Vorsprünge 66 auf, welche von der Schlosszunge 26 einseitig oder beidseitig quer, insbesondere orthogonal, zu dessen Einführrichtung in das Gurtschloss 10 hervorstehen. Beidseitige Vorsprünge erlauben beidseitiges Einführen und korrektes Erfassen, lediglich einseitige Vorsprünge sind kostengünstiger und erlauben bereits beim Einführen ein Verdrehen des Gurtes zu erkennen und eine korrekte Orientierung der Schlosszunge 26 vorzugeben.

Weiterhin ist dafür das Betätigungselement 60 mittels jeweiliger Langlöcher 68 an dem Bolzen gelagert. Dadurch kann das Betätigungselement 60 nicht nur verschwenkt werden, sondern auch translatorisch entlang einer Haupterstreckung des Langlochs 68 an dem Bolzen verlagert werden. Außerdem weist das Betätigungselement 60 einen Anlagebereich 70 auf, welcher vorliegend durch die äußeren Wandbereiche des das Langloch 68 bildenden Teilbereichs des Betätigungslements 60 gebildet werden.

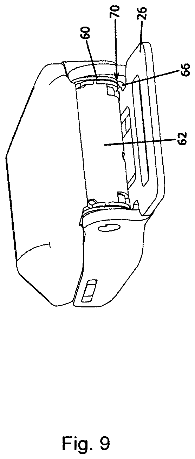

Die Vorsprünge 66 drücken bei eingeführter Schlosszunge 26 auf die Anlagebereiche 70, was insbesondere in der Detailansicht von Fig. 9 zu erkennen ist. Dadurch wird das Betätigungselement 60 im ersten Rotationsbereich von Betätigungselement 60 und Plattenelement 18 in Richtung des Sensors 32 gedrückt, was in Fig. 6 durch Pfeil 72 veranschaulicht ist. Da die Druckrichtung mit der Haupterstreckung des Langlochs 68 und damit des translatorischen Freiheitsgrads des Betätigungselements 60 weitestgehend zusammenfällt, wird das Betätigungselement mit einer entsprechend großen Kraft auf den Sensor 32 gedrückt.

Befindet sich das Plattenelement 18 und das Betätigungselement 60 in dem zweiten Rotationsbereich, wird das Betätigungselement 60 quer zum Sensor 32 bzw. einer Messfläche des Sensor 32 durch die Vorsprünge 66 gedrückt. Die Kraft wirkt dort nahezu parallel zu der Messfläche des Sensors 32. Zudem blockiert das Langloch 68 eine Bewegung des Betätigungselements 60 in diese Richtung und/oder der Anlagebereich 70 kann so gestaltet sein, dass das Betätigungselement 60 in einer solchen Stellung weniger weit bzw. stark nach oben gedrückt wird. Insgesamt wird so eine deutlich kleinere Kraft am Sensor 32 erfasst. Dabei kann ein Schwellwert dieser Kraft vorgegeben werden, ab welchem der geöffnete bzw. der geschlossene Zustand erfasst wird. Der Sensor 32 ist, gemäß der Erfindung, als einfacher mechanischer Schalter ausgebildet, der erst ab einer gewissen Mindestkraft, mit welcher das Betätigungselement 60 auf diesen drückt, geschaltet wird. Zur Verbesserung der Zuverlässigkeit kann das Betätigungselement 60 von dem Sensor weggespannt sein, beispielsweise mittels einer Feder.

Ist die Schlosszunge 26 nicht in das Gurtschloss eingeführt, drücken die Vorsprünge 66 das Betätigungselement 60 nicht in Richtung des Sensors 32, unabhängig von jeweiligen rotatorischen Stellungen des Plattenelements 18 und des Betätigungselements 60. Entsprechend wird dann immer der geöffnete Zustand erfasst.

Somit kann mit einfachen mechanischen und zuverlässigen Mitteln immer korrekt bei dem Flugzeugsicherheitsgurt erfasst werden, ob dieser geöffnet oder geschlossen ist. Dabei kann auf störende Magnete, teure und anfällige Sensorik und insbesondere mehrere Sensoren sowie eine elektronische Auswertung verzichtet werden. Damit braucht die Erfassung zudem besonders wenig Energie und der Flugzeugsicherheitsgurt kann besonders leicht sein.

Fig. 10 zeigt noch, wie auch beim Betätigungselement 60 eine übermäßige Einschränkung der Sendeleistung der Sensoranordnung 30 vermieden werden kann. Das Betätigungselement 60 weist dazu in seinem flachen Bereich 58 eine Durchgangsöffnung bzw. Aussparung 76 auf, welche jeweilige elektromagnetische Wellen des Senders 34 bzw. dessen Antenne dort ungehindert passieren lässt. Auch das Plattenelement 18 und/oder die Grundplatte 14 können ähnliche Aussparungen bzw. Durchgangsöffnungen aufweisen. Vorzugsweise sind diese Aussparungen bzw. Durchgangöffnungen in Überdeckung miteinander angeordnet und/oder im Bereich des Senders 34, insbesondere benachbart zu diesem.

### Bezugszeichenliste:

- 10: Gurtschloss
- 12: Hauptkörper
- 14: Grundplatte
- 16: Drehgelenk
- 18: Plattenelement
- 20: Schlitz
- 22: Blockierstift
- 24: Aufnahmeöffnung
- 26: Schlosszunge
- 28: Durchgangsöffnung
- 30: Sensoranordnung
- 32: Sensor
- 34: Sender
- 36: Batterie
- 38: Abdeckplatte
- 40: Hohlraum
- 42: Verschraubung
- 50: System
- 52: Flugzeugsitz
- 54: Empfangseinheit
- 56: Anzeigeeinheit
- 58: flacher Bereich
- 60: Betätigungselement
- 62: Rastelement
- 64: Pfeil
- 66: Vorsprung
- 68: Langloch
- 70: Anlagebereich
- 72: Pfeil
- 74: Pfeil

## Patentansprüche

1. Flugzeugsicherheitsgurt mit einem Gurtschloss (10) und einer Schlosszunge (26); wobei das Gurtschloss (10) aufweist:
einen Hauptkörper (12), der eine Grundplatte (14) und ein an der Grundplatte (14) drehbar gelagertes Plattenelement (18) umfasst, wobei das Plattenelement (18) zwischen wenigstens einem ersten Rotationsbereich, in welchem das Gurtschloss (10) und die in das Gurtschloss (10) eingeführte Schlosszunge (26) miteinander verriegelt sind, und wenigstens einem zweiten Rotationsbereich, in welchem das Gurtschloss (10) und die in das Gurtschloss (10) eingeführte Schlosszunge (26) entriegelt sind, wodurch die Schlosszunge (26) aus dem Gurtschloss (10) herausziehbar ist, verschwenkbar ist; und
eine Sensoranordnung (30), wobei die Sensoranordnung (30) aufweist:
einen mechanischen Sensor (32) zum Erfassen eines Schließzustandes des Flugzeugsicherheitsgurts;
einen Sender (34) zum Übertragen des erfassten Schließzustandes;
und
eine Stromversorgung zum Betreiben des Sensors (32) und des Senders (34);
wobei die Schlosszunge (26) und das Gurtschloss (10) so ausgebildet sind, dass durch das Zusammenführen der Schlosszunge (26) und des Gurtschlosses (10) der Flugzeugsicherheitsgurt von einem geöffneten in einen geschlossenen Zustand überführt werden kann, **dadurch gekennzeichnet, dass** der Flugzeugsicherheitsgurt einen verriegelten ersten Zustand mit eingeführter Schlosszunge, einen entriegelten zweiten Zustand mit eingeführter Schlosszunge und einen unverbundenen dritten Zustand, in der die Schlosszunge nicht mit dem Gurtschloss zusammengeführt ist, aufweist, wobei der dritte Zustand unabhängig von der Position des Plattenelements (18) ist, und wobei der Flugzeugsicherheitsgurt dazu ausgebildet ist, mit dem Sensor (32) den ersten Zustand als geschlossenen Zustand zu erfassen und den zweiten und dritten Zustand als geöffneten Zustand.

2. Flugzeugsicherheitsgurt (10) nach Anspruch 1, wobei die Stromversorgung eine Batterie (36) aufweist und der Sender (34) ein kabelloser Sender (34) ist, um den Schließzustand kabellos zu übertragen, wobei der Sender (34) vorzugsweise ein Bluetooth-Sender ist.

3. Flugzeugsicherheitsgurt (10) nach einem der Ansprüche 1 oder 2, wobei der Sender (34) konfiguriert ist, bei einer Änderung des Schließzustandes von einem passiven in einen aktiven Zustand überzugehen, um den erfassten Schließzustand zu übertragen, wobei der Sender (34) ferner konfiguriert ist, nach der Übertragung des erfassten Schließzustands in den passiven Zustand überzugehen.

4. Flugzeugsicherheitsgurt (10) nach Anspruch 3, wobei der Sender (34) ferner konfiguriert ist, nach dem Übertragen des Schließzustandes solange in dem aktiven Zustand zu verbleiben, bis eine Empfangsbestätigung des zuvor übertragenen Schließzustandes am Sender (34) erhalten wird.

5. Flugzeugsicherheitsgurt (10) nach einem der Ansprüche 1 bis 4, ferner aufweisend:
einen Hauptkörper (12), der eine Grundplatte (14) und ein an der Grundplatte (14) drehbar gelagertes Plattenelement (18) umfasst;
eine Abdeckplatte (38), die eine Ausnehmung auf ihrer Unterseite aufweist, wobei die Unterseite der Abdeckplatte (38) mit dem Plattenelement (18) verbunden ist, sodass sich ein Hohlraum (40) zwischen dem Plattenelement (18) und der Abdeckplatte (38) ausbildet, wobei die Sensoranordnung (30) in dem Hohlraum (40) zwischen dem Plattenelement (18) und der Abdeckplatte (38) angeordnet ist.

6. Flugzeugsicherheitsgurt nach einem der Ansprüche 1 bis 5, wobei
der Hauptkörper (12) des Gurtschlosses (10) ein ebenfalls drehbar an der Grundplatte (14) gelagertes Betätigungselement aufweist, welches rotatorisch an das Plattenelement gekoppelt ist, und
der Sensor (32) als mechanischer Sensor ausgebildet ist, wobei der Flugzeugsicherheitsgurt so ausgebildet ist, dass die in das Gurtschloss eingeführte Schlosszunge (26) das Betätigungselement in dem zweiten Rotationsbereich mit einer geringeren Kraft gegen den Sensor drückt als in dem ersten Rotationsbereich.

7. Flugzeugsicherheitsgurt nach Anspruch 6, wobei
das Betätigungselement (18) zusätzlich translatorisch beweglich an der Grundplatte (14) gelagert ist, insbesondere in einer Richtung quer zu einer Einführrichtung der Schlosszunge (26) und/oder einer Richtung quer zu einer Rotationsachse des Plattenelements (18).

8. Flugzeugsicherheitsgurt nach Anspruch 6 oder 7, wobei
die Schlosszunge wenigstens einen Vorsprung und das Betätigungselement wenigstens einen korrespondierenden Anlagebereich oder umgekehrt aufweist, welche geometrisch so aufeinander abgestimmt sind, dass die in das Gurtschloss eingeführte Schlosszunge (26) das Betätigungselement (18) in dem zweiten Rotationsbereich mit einer geringeren Kraft gegen den Sensor drückt als in dem ersten Rotationsbereich.

9. System (50) zur Erfassung und Anzeige eines Schließzustandes mindestens eines Flugzeugsicherheitsgurts in einem Flugzeug, wobei das System (50) umfasst:
mindestens einen Flugzeugsicherheitsgurt nach einem der Ansprüche 1 bis 8;
eine Empfangseinheit (54) zum Empfangen des vom Sender (34) übertragenen Schließzustandes; und
mindestens eine Anzeigeeinheit (56) zum Anzeigen des Schließzustandes von dem mindestens einen Flugzeugsicherheitsgurt.

10. System (50) nach Anspruch 9, wobei das System (50) einen Speicher aufweist, der die empfangenen Schließzustände speichert, vorzugsweise in Verbindung mit der Zeit, zu der der Schließzustand bestimmt wurde.

11. Verfahren zur Erfassung eines Schließzustandes von mindestens einem Flugzeugsicherheitsgurt nach einem der Ansprüche 1 bis 8, wobei das Verfahren die folgenden Schritte aufweist:
a) Bereitstellen der Sensoranordnung (30) in jedem des mindestens einen Gurtschlosses (10);
b) Erfassen der Schließzustände unter Verwendung des mechanischen Sensors (32) der Sensoranordnung (30); und
c) Übertragen des erfassten Schließzustandes unter Verwendung des Senders (34) der Sensoranordnung(30).

12. Verfahren nach Anspruch 11, wobei der Sender (34) bei einer Änderung des Schließzustandes von einem passiven in einen aktiven Zustand übergeht, und im aktiven Zustand den erfassten Schließzustand überträgt, wobei der Sender (34) nach der Übertragung des erfassten Schließzustands in den passiven Zustand übergeht.

## Claims

1. An aircraft safety belt with a belt buckle (10) and a buckle tongue (26);
wherein the belt buckle (10) comprises:
a main body (12) comprising a base plate (14) and a plate member (18) rotatably mounted at the base plate (14), wherein the plate member (18) is pivotable between at least one first range of rotation in which the belt buckle (10) and the buckle tongue (26) inserted into the belt buckle (10) are interlocked with one another and at least one second range of rotation in which the belt buckle (10) and the buckle tongue (26) inserted into the belt buckle (10) are unlocked, thus allowing the buckle tongue (26) to be pulled out of the belt buckle (10); and
a sensor assembly (30), wherein the sensor assembly (30) comprises:
a mechanical sensor (32) for detecting a closed state of the aircraft safety belt;
a transmitter (34) for transmitting the detected closed state; and
a power supply for operating the sensor (32) and the transmitter (34);
wherein the buckle tongue (26) and the belt buckle (10) are configured such that the aircraft safety belt may be brought from an open into a closed state by connecting the buckle tongue (26) and the belt buckle (10); **characterized in that**
the aircraft safety belt comprises a locked first state with the buckle tongue inserted, an unlocked second state with the buckle tongue inserted, and a disconnected third state in which the buckle tongue is not connected with the belt buckle, wherein the third state is independent of the position of the plate member (18), and wherein the aircraft safety belt is configured to detect with the sensor (32) the first state as a closed state and the second and third states as an open state.

2. The aircraft safety belt (10) according to claim 1, wherein the power supply comprises a battery (36) and the transmitter (34) is a wireless transmitter (34) in order to transmit the closed state wirelessly, wherein preferably the transmitter (34) is a Bluetooth transmitter.

3. The aircraft safety belt (10) according to any one of claims 1 or 2, wherein the transmitter (34) is configured to turn from a passive into an active state upon change of the state of closure in order to transmit the detected state of closure, wherein the transmitter (34) is further configured to turn into the passive state after transmitting the detected state of closure.

4. The aircraft safety belt (10) according to claim 3, wherein the transmitter (34) is further configured to stay in the active state after transmitting the state of closure until a confirmation of receipt of the state of closure transmitted beforehand is received by the transmitter (34).

5. The aircraft safety belt (10) according to any one of claims 1 to 4, further comprising:
a main body (12) comprising a base plate (14) and a plate member (18) rotatably mounted at the base plate (14);
a cover plate (38) comprising a recess at its lower surface, wherein the lower surface of the cover plate (38) is connected to the plate member (18) so that a cavity (40) forms between the plate member (18) and the cover plate (38), wherein the sensor assembly (30) is arranged in the cavity (40) between the plate member (18) and the cover plate (38).

6. The aircraft safety belt according to any one of claims 1 to 5, wherein
the main body (12) of the belt buckle (10) comprises an actuator which is also rotatably mounted at the base plate (14) and which is rotatably coupled to the plate member, and
the sensor (32) is configured as a mechanical sensor, wherein the aircraft safety belt is configured such that the buckle tongue (26) inserted into the belt buckle presses the actuator against the sensor with a lower force in the second range of rotation than in the first range of rotation.

7. The aircraft safety belt according to claim 6, wherein
the actuator (18) is additionally translationally movably mounted at the base plate (14), particularly in a direction transverse to an insertion direction of the buckle tongue (26) and/or a direction transverse to a rotational axis of the plate member (18).

8. The aircraft safety belt according to claim 6 or claim 7, wherein
the buckle tongue comprises at least one protrusion and the actuator comprises at least one corresponding contact region or vice versa, which are coordinated geometrically such that the buckle tongue (26) inserted into the belt buckle presses the actuator (18) against the sensor with a lower force in the second range of rotation than in the first range of rotation.

9. A system (50) for detecting and displaying a state of closure of at least one aircraft safety belt in an aircraft, wherein the system (50) comprises:
at least one aircraft safety belt according to any one of claims 1 to 8;
a receiving unit (54) for receiving the state of closure transmitted by the transmitter (34); and
at least one display unit (56) for displaying the state of closure of the at least one aircraft safety belt.

10. The system (50) according to claim 9, wherein the system (50) comprises a memory which stores the received states of closure, preferably in connection with the time at which the state of closure was determined.

11. A method for detecting a closed state of at least one aircraft safety belt according to any one of claims 1 to 8, wherein the method comprises the following steps:
a) Providing the sensor assembly (30) in each of the at least one belt buckle (10);
b) Detecting the states of closure using the mechanical sensor (32) of the sensor assembly (30); and
c) Transmitting the detected state of closure using the transmitter (34) of the sensor assembly (30).

12. The method according to claim 11, wherein the transmitter (34) turns from a passive into an active state upon change of the state of closure and transmits the detected state of closure in the active state, wherein the transmitter (34) turns into the passive state after transmitting the detected state of closure.

## Revendications

1. Ceinture de sécurité d'avion, comprenant une attache de ceinture (10) et une languette de serrure (26) ; l'attache de ceinture (10) comportant :
un corps principal (12), qui comprend une plaque de base (14) et un élément formant plaque (18) monté rotatif sur la plaque de base (14), l'élément formant plaque (18) pouvant être pivoté entre au moins une première zone de rotation,
dans laquelle l'attache de ceinture (10) et la languette de serrure (26) insérée dans l'attache de ceinture (10) sont verrouillées ensemble, et au moins une seconde zone de rotation, dans laquelle l'attache de ceinture (10) et la languette de serrure (26) insérée dans l'attache de ceinture (10) sont déverrouillées,
moyennant quoi la languette de serrure (26) peut être extraite de l'attache de ceinture (10) ; et
un ensemble détecteur (30), l'ensemble détecteur (30) comportant :
un capteur (32) mécanique destiné à détecter un état de fermeture de la ceinture de sécurité d'avion ;
un émetteur (34) destiné à transmettre l'état de fermeture détecté ; et
une alimentation électrique destinée à faire fonctionner le capteur (32) et l'émetteur (34) ;
la languette de serrure (26) et l'attache de ceinture (10) étant conçues de telle manière que, en réunissant la languette de serrure (26) et l'attache de ceinture (10), il est possible de faire passer la ceinture de sécurité d'avion d'un état ouvert à un état fermé, **caractérisée en ce que**
la ceinture de sécurité d'avion comporte un premier état verrouillé avec la languette de serrure insérée, un deuxième état déverrouillé avec la languette de serrure insérée et un troisième état non relié, dans lequel la languette de serrure n'est pas réunie avec l'attache de ceinture, le troisième état étant indépendant de la position de l'élément formant plaque (18) et la ceinture de sécurité d'avion étant conçue pour détecter, au moyen du capteur (32), le premier état comme état fermé et le deuxième et le troisième état comme état ouvert.

2. Ceinture de sécurité d'avion (10) selon la revendication 1, dans laquelle l'alimentation électrique comporte une pile électrique (36) et l'émetteur (34) est un émetteur sans fil (34), pour transmettre sans fil l'état de fermeture, l'émetteur (34) étant de préférence un émetteur Bluetooth.

3. Ceinture de sécurité d'avion (10) selon l'une des revendications 1 et 2, dans laquelle l'émetteur (34) est configuré pour passer, lors d'un changement de l'état de fermeture, d'un état passif à un état actif, pour transmettre l'état de fermeture détecté, l'émetteur (34) étant en outre configuré pour passer à l'état passif après la transmission de l'état de fermeture détecté.

4. Ceinture de sécurité d'avion (10) selon la revendication 3, dans laquelle l'émetteur (34) est en outre configuré pour rester dans l'état actif après la transmission de l'état de fermeture jusqu'à ce qu'une confirmation de réception de l'état de fermeture auparavant transmis soit reçue sur l'émetteur (34).

5. Ceinture de sécurité d'avion (10) selon l'une des revendications 1 à 4, comportant en outre :
un corps principal (12), qui comprend une plaque de base (14) et un élément formant plaque (18) monté rotatif sur la plaque de base (14) ;
une plaque de recouvrement (38), qui comporte un évidement sur sa face inférieure,
la face inférieure de la plaque de recouvrement (38) étant reliée à l'élément formant plaque (18), de telle sorte qu'un espace creux (40) se forme entre l'élément formant plaque (18) et la plaque de recouvrement (38), l'ensemble détecteur (30) étant disposé dans l'espace creux (40) entre l'élément formant plaque (18) et la plaque de recouvrement (38).

6. Ceinture de sécurité d'avion selon l'une des revendications 1 à 5, dans laquelle le corps principal (12) de l'attache de ceinture (10) comporte un élément d'actionnement également monté rotatif sur la plaque de base (14), qui est couplé de manière rotative à l'élément formant plaque, et
le capteur (32) est réalisé sous la forme d'un capteur mécanique, la ceinture de sécurité d'avion étant conçue de telle manière que la languette de serrure (26) insérée dans l'attache de ceinture pousse l'élément d'actionnement contre le capteur avec une force plus faible dans la seconde zone de rotation que dans la première zone de rotation.

7. Ceinture de sécurité d'avion selon la revendication 6, dans laquelle l'élément d'actionnement (18) est monté en outre mobile en translation sur la plaque de base (14), en particulier dans une direction transversale à une direction d'insertion de la languette de serrure (26) et/ou une direction transversale à un axe de rotation de l'élément formant plaque (18).

8. Ceinture de sécurité d'avion selon la revendication 6 ou 7, dans laquelle la languette de serrure comporte au moins une saillie et l'élément d'actionnement au moins une zone d'appui correspondante ou inversement, qui sont adaptées géométriquement l'une à l'autre de telle manière que la languette de serrure (26) insérée dans l'attache de ceinture pousse l'élément d'actionnement (18) contre le capteur avec une force plus faible dans la seconde zone de rotation que dans la première zone de rotation.

9. Système (50) de détection et d'indication d'un état de fermeture d'au moins une ceinture de sécurité d'avion dans un avion, le système (50) comprenant :
au moins une ceinture de sécurité d'avion selon l'une des revendications 1 à 8 ;
une unité de réception (54) pour recevoir l'état de fermeture transmis par l'émetteur (34) ; et
au moins une unité d'indication (56) pour indiquer l'état de fermeture de l'au moins une ceinture de sécurité d'avion.

10. Système (50) selon la revendication 9, dans lequel le système (50) comporte une mémoire, qui enregistre les états de fermeture reçus, de préférence en liaison avec le moment auquel l'état de fermeture a été déterminé.

11. Procédé de détection d'un état de fermeture d'au moins une ceinture de sécurité d'avion selon l'une des revendications 1 à 8, le procédé comportant les étapes suivantes de :
a) mettre à disposition l'ensemble détecteur (30) dans chacune des au moins une attaches de ceinture (10) ;
b) détecter les états de fermeture au moyen du capteur (32) mécanique de l'ensemble détecteur (30) ; et
c) transmettre l'état de fermeture détecté au moyen de l'émetteur (34) de l'ensemble détecteur (30).

12. Procédé selon la revendication 11, dans lequel l'émetteur (34) passe, lors d'un changement de l'état de fermeture, d'un état passif à un état actif, et, dans l'état actif, transmet l'état de fermeture détecté, l'émetteur (34) passant à l'état passif après la transmission de l'état de fermeture détecté.
